(19) Europäisches Patentamt
European Patent Office
Office européen des brevets

(11) **EP 1 333 402 B1**

(12) **EUROPÄISCHE PATENTSCHRIFT**

(45) Veröffentlichungstag und Bekanntmachung des Hinweises auf die Patenterteilung:
**10.09.2008  Patentblatt 2008/37**

(51) Int Cl.:
***G06K 19/06*** (2006.01)

(21) Anmeldenummer: **02002542.5**

(22) Anmeldetag: **04.02.2002**

(54) **Redundanter zweidimensionaler Code und Decodierverfahren**

Redundant twodimensional code and decoding method

Code redondant à deux dimensions et procédé de décodage

(84) Benannte Vertragsstaaten:
**AT BE CH CY DE DK ES FI FR GB GR IE IT LI LU MC NL PT SE TR**

(43) Veröffentlichungstag der Anmeldung:
**06.08.2003  Patentblatt 2003/32**

(73) Patentinhaber: **Baumer Optronic GmbH**
**01454 Radeberg (DE)**

(72) Erfinder:
• **Boitsov, Sergej Valentinovitch, Dipl.-Ing.**
**194017 Sankt-Petersburg (RU)**
• **Ihlefeld, Joachim, Dr.-Ing.**
**01097 Dresden (DE)**
• **Aleksejevitch, Vjatcheslav Kolesnik**
**197348 Sankt-Petersburg (RU)**

(74) Vertreter: **Herden, Andreas F.**
**Blumbach - Zinngrebe**
**Patentanwälte**
**Alexandrastrasse 5**
**65187 Wiesbaden (DE)**

(56) Entgegenhaltungen:
**US-A- 5 576 532          US-A- 5 939 703**

**Beschreibung**

Die Erfindung betrifft einen redundanten zweidimensionalen Code und ein für die Codeauswertung angepasstes Decodierverfahren, insbesondere einen Code zur Ermittlung einer zweidimensionalen Position eines für die Codeauswertung angepassten Lesegeräts auf einer Oberfläche.

Die elektronische Ermittlung der Position eines Eingabegeräts zur Speicherung, Verarbeitung oder Anzeige von handgeschriebenen Informationen erfordert in der Regel eine aktive Eingabeoberfläche. Ein derartiges Eingabegerät wird in seinen Abmessungen dadurch schnell unhandlich. Zudem ist durch die aktive Oberfläche, beziehungsweise Unterlage die Größe des Eingabefelds begrenzt. Außerdem ist für viele Anwendungen das handgeschriebene Original neben der elektronischen Erfassung und Aufzeichnung erforderlich, was aber bei einer Eingabe über eine elektronisch aktive Unterlage verlorengeht.

Andererseits können Daten von einer passiven Unterlage oder Oberfläche mittels Strichcodes eingelesen werden. Solche Strichcodes sind ihrer Natur nach jedoch eindimensional und können dementsprechend für eine zweidimensionale Positionserfassung nicht verwendet werden.

Um gegenüber Strichcodes eine höhere Informationsdichte zu erreichen, sind hierzu zweidimensionale Codes oder Matrixcodes entwickelt worden. Solche Codes können, sofern sie sich auf einer passiven Unterlage, wie etwa einem Blatt Papier befinden, zu einer Positionsbestimmung verwendet werden. Bei derartigen zweidimensionalen Codes besteht jedoch die Schwierigkeit darin, den Anfang eines einzulesenden Datenfelds zu ermitteln. Um die codierten Daten decodieren zu können, ist hierzu die Abtastung eines verhältnismäßig großen Datenfelds notwendig, in welchem sich in der Regel mehrere zu identifizierende Erkennungsstrukturen befinden. Solche Erkennungsstrukturen müssen die Ermittlung der Winkelorientierung der Datenstruktur einerseits, sowie das Zuordnen der Datenstrukturen und der Orientierung der Datenstrukturen andererseits ermöglichen. Um beides gewährleisten zu können, ist bisher ein Gesichtsfeld für die Aufzeichnung der Daten notwendig, welches wenigstens doppelt so groß ist wie die einzelnen Dateneinheiten. Befinden sich beispielsweise die Strukturen zur Ermittlung der Winkelorientierung des Eingabegeräts relativ zur Oberfläche am Rand einer Dateneinheit, so liegen bei einem Gesichtsfeld, das im Durchmesser kleiner als die doppelte Länge der Diagonalen der Dateneinheiten ist, nicht immer alle Orientierungsstrukturen im Gesichtsfeld, so daß die Ermittlung der Orientierung nicht gelingt. Das räumliche Zuordnen der Datenstrukturen wird bisher mit sogenannten "Homing-Strukturen" des Oberflächenmusters bewerkstelligt, mit der sich die Daten in Form von Oberflächenstrukturen einem Datenblock zuordnen lassen.

Neben der Erfassung von Positionsdaten einer Schreibspitze existieren für zweidimensionale Codes auch andere Anwendungen, wie etwa die schnelle und hoch genaue zweidimensionale Positionserkennung für optische Messgeräte. Solche Messgeräte können unter anderem bei der Positionserkennung und Positionierung von Werkzeugen verwendet werden.

Eine bekannte zweidimensionale Informationscodierung ist die Codierung nach Bresenham. Dabei werden Punkte relativ zu einem orthogonalen Raster jeweils um 1/3 der Rasterperiode nach oben, unten, links oder rechts verschoben. Jeder Rasterpunkt hat damit ein "Gewicht" von 2 bit, wobei die Codes dann in x- und y- Richtung getrennt decodiert werden. Man erhält in jeder Zeile und Spalte Teilstücke eines Codes, der dann aus mehreren Zeilen und Spalten zusammengesetzt wird. Bei einer geforderten Auflösung von z.B. $100\mu$m, welche dem geringsten Punktabstand entspricht, beträgt die Informationsdichte 2 bit/(300 x 300 $\mu$m$^2$). Zur Decodierung muß eine Codeunit vollständig erfaßt werden, was immer dann erfüllt ist, wenn das erfasste Gesichtsfeld der entsprechenden Datenaufzeichnungseinheit mindestens doppelt so groß ist, wie die Codeunit. Bei einer Größe einer Informationseinheit oder Codeunit von 7 Rasterpunkten erfordert dies bei der oben angenommenen Auflösung eine Größe der Codeunit von etwa 2 x 2 mm$^2$ und somit ein quadratisches Gesichtsfeld von ca. 4 x 4 mm$^2$.

Verwendet man solche Strukturen auf einer passiven Schreibunterlage für die Positionsbestimmung, so setzt das Erfordernis eines im Verhältnis zu den Datenstrukturen großen Gesichtsfelds die erreichbare Ortsgenauigkeit der Positionsbestimmung herab.

Zudem verlangt das Erkennen von Strukturen innerhalb eines großen Gesichtsfelds eine verzeichnungsarme Optik mit hoher Tiefenschärfe und geringen Aberrationen, was für optische Systeme, die sich nahe am aufzunehmenden Objekt befinden, schwer zu realisieren ist.

Die endliche Tiefenschärfe der Optik wird besonders beim Betrieb nahe der Beugungsgrenze problematisch, wenn Pixel im Größenbereich kleiner 10 $\mu$m verwendet werden. Die Lage der Stiftspitze muß indirekt aus der Lage des Schnittpunkts der optischen Achse der Kamera mit dem Papier und der Parallaxe (stürzende Rasterlinien) berechnet werden.

Da die Optik in der Regel nicht in der zum Schreiben verwendeten Spitze des Lese-/Eingabegeräts untergebracht ist, ergibt sich außerdem zwischen der Position der Schreibspitze und der von der Optik erfassten Datenstruktur eine Parallaxe, die zudem mit der von der Handhaltung des Benutzers abhängigen Neigung des Lese-/Eingabegeräts gegen die Oberfläche der Schreibunterlage abhängig ist und sich fortlaufend ändert. Auch dies setzt die Genauigkeit der Positionsbestimmung erheblich herab.

Ein weiterer Nachteil bei Informationscodierungen besteht darin, dass die von der Leseoptik gelieferten Informationen nur teilweise ausgewertet werden können. In der Regel liefert eine Aufnahmeoptik eines Lesegeräts ein kreisförmiges Gesichtsfeld. Die Codeunits sind aber meistens quadratisch. Die außerhalb einer solchen Codeunit, aber innerhalb des Gesichtsfelds liegenden Informationen können nach den bekannten Verfahren nicht für die Decodierung verwendet werden, so dass nicht alle verfügbare Information ausgenutzt wird. Die bekannten Codierungs/Decodierungsverfahren können somit eine wahlfreie geometrische Anordnung der eingelesenen Daten nicht ausnutzen. Ein Oberflächenmuster mit den Merkmalen des Oberbegriffs des Anspruchs 1 ist aus US-A-5,939,703 bekannt.

Die Erfindung hat es sich daher zur Aufgabe gemacht, einen optimalen Code mit hoher Informationsdichte und ein an diesen Code angepasstes Decodierverfahren bereitzustellen, der auch mit einem kleinen Gesichtsfeld wahlfreier Form stabil gelesen werden kann.

Diese Aufgabe wird auf höchst überraschende Weise mittels eines Oberflächenmusters mit den Merkmalen von Anspruch 1 und einem Verfahren zur Decodierung mit den in Anspruch 25 definierten Schritten gelöst.

Mit einem zweidimensionalen Oberflächenmuster, welches insbesondere zur Erkennung einer absoluten Ortsposition an der Oberfläche dienen kann und ein Muster aufweist, welches ein der Synchronisation dienendes SYNC-Pattern und einen positionsabhängigen Code PC(x, y) umfasst, lässt sich eine zweidimensionale Datenstruktur auf eine minimale Ausdehnung, beziehungsweise eine minimale Bitanzahl reduzieren, wenn das SYNC-Pattern variabel ist und nach einer vorbekannten Bildungsvorschrift gebildet wird. Ein Orientierungsmuster oder eine "Homing-Struktur" sind für den erfindungsgemäßen Code nicht notwendig. Als Oberflächenmuster wird dabei ein Muster verstanden, welches in der Nähe der Oberfläche von zumindest einer Seite aus sichtbar sein soll, wobei die Sichtbarkeit in diesem Zusammenhang nicht auf das visuelle Spektrum des Menschen beschränkt ist, sondern auch das UV-sowie IR-Spektrum umfassen kann. Unter einem variablen SYNC-Pattern wird ein der Synchronisation dienendes Muster verstanden, welches über die Oberfläche hinweg veränderlich ist. Dies wird bewerkstelligt, indem das SYNC-Pattern entlang einer oder mehrerer Richtungen der Oberfläche eine zusätzliche Strukturierung oder Modulation aufweist, deren Bildungsvorschrift bekannt ist.

Das Oberflächenmuster ist die physikalische Ausprägung einer Informationsverteilung. Diese Informationsverteilung wird zum besseren Verständnis durch eine binäre 2D- Verteilung mit schwarzen (0) und weißen (1) Quadraten dargestellt, kann jedoch durch eine Vielfalt anderer Modulationsverfahren erzeugt werden.

Um die Synchronisation, beziehungsweise die Bestimmung von Referenzpunkten im Oberflächenmuster zu erleichtern, kann das SYNC-Pattern vorteilhaft zwei Komponenten umfassen, welche jeweils zur Synchronisation entlang zweier nicht paralleler Richtungen auf der Oberfläche verwendet werden können.

Um ein geringeres Gesichtsfeld als ein Quadrat mit der fast doppelten Länge der Codeunit zu erhalten, muß die Verteilung der SYNC-Information so beschaffen sein, daß ein vollständiges SYNC-Pattern auch dann entsteht, wenn z.B. 4 Viertel von angeschnittenen unvollständigen Codeunits im Gesichtsfeld liegen. In diesem Fall muß der Decoder in der Lage sein, aus den benachbarten Codeunits die fehlende SYNC-Information zu holen. Deshalb ist es wichtig, die SYNC-Information nicht nur in einer Ecke sondern geometrisch gleichmäßig über der Fläche der Codeunit anzuordnen.

Um die für die Darstellung der Informationen notwendige Stabilität der SYNC-Pattern-Erkennung zu gewährleisten, sind Mehrdeutigkeiten und Störungen möglichst zu vermeiden. Damit die zur Darstellung der erforderlichen Information notwendige Anzahl von Bits reduziert werden kann, kann das SYNC-Pattern zusätzlich positionsabhängigen Code aufweisen. Da ein großes SYNC- Pattern die Anzahl der Nettobits pro Codeunit reduziert, können beispielsweise die Least Significant Bits (LSB) der x- und y- Koordinate zur Synchronisation mit verwendet werden. Ein Optimum ergibt sich dabei, wenn das SYNC-Pattern ausschließlich aus den LSB der x- und y-Koordinaten aufgebaut ist. Es können aber auch andere Informationen, wie beispielsweise der Document Identifier in das SYNC-Pattern integriert werden. Insbesondere ist hierbei vorteilhaft, die LSBs des positionsabhängigen Codes in das SYNC-Pattern zu integrieren. Die LSB's der x- und y-Koordinaten ändern sich bei einer kartesischen Zuordnung der Koordinaten abwechselnd, so dass sich eine zusätzliche Strukturierung der SYNC-Pattern ergibt. Diese Struktur kann insbesondere dafür verwendet werden, die azimuthale Orientierung der Optik des Lesegeräts zur Unterlage festzustellen. Bedingt durch die Symmetrie des SYNC-Pattern kann es durch eine halbe Drehung des Oberflächenmusters auf sich selbst zu liegen kommen, was zu einer Ununterscheidbarkeit dieser beiden Situationen führt. Werden dagegen die LSB's der x- und y-Koordinaten geeignet in das SYNC-Pattern integriert, so weist das SYNC-Pattern eine zusätzliche charakteristische Modulation auf, welche die Unterscheidbarkeit und Erkennung von Verdrehungen des Lesegeräts zur Unterlage ermöglicht. Ein derartiges SYNC-Pattern erweist sich zudem als sehr resistent gegenüber typischen Störungen des Musters, wie etwa schwarzen oder weißen Flecken. Die Variabilität des SYNC-Patterns gemäß dieses Ausführungsbeispiels wird also durch die charakteristische Modulation der LSB's erzeugt, deren Bildungsvorschrift zudem bekannt ist, da sich Low- und High Bits sowohl entlang der x-Richtung als auch der y-Richtung abwechseln.

Die Bestandteile des Oberflächenmusters sind dabei vorteilhaft in Einheiten, in Form von Codeunits zusammengefaßt, welche vorzugsweise eine quadratische oder hexagonale Form aufweisen. Als Codeunit wird dabei ein Bereich des Oberflächenmusters bezeichnet, welcher zumindest einen Datensatz enthält, der ein vollständiges SYNC-Pattern, einen für den Ort, an welcher sich die Codeunit befindet, vollständigen positionsabhängigen Code PC(x, y) und Teile von einem vollständigen Document-Identifier, DI, enthält.

Für eine Minimierung des für die Erkennung des Oberflächenmusters notwendigen Gesichtsfeldes ist es außerdem zweckmäßig, daß das SYNC-Pattern mit zumindest der doppelten Ortsfrequenz in x- und y-Richtung, im Vergleich zu dem positionsabhängigen Code und dem Document-Identifier, DI, an der Oberfläche angeordnet ist. Dies stellt sicher, daß auch bei einem Gesichtsfeld von der Größe einer Codeunit für eine sichere Erkennung hinreichend große Teile des SYNC-Patterns im Gesichtsfeld liegen.

Um die Fehlertoleranz bei der Mustererkennung zu erhöhen, ist insbesondere eine redundante Codierung der Daten im Oberflächenmuster vorteilhaft. Insbesondere können der positionsabhängige Code PC(x, y) und/oder der Document-Identifier redundant codiert sein. Hierfür sind beispielsweise eine Hamming-Codierung oder eine REED-Solomon-Codierung geeignet. Weiterhin kann eine modifizierte Hamming-Codierung für die Anwendung vorteilhaft verwendet werden, die weiter unten detailliert beschrieben ist.

Ebenso wie die positionsabhängigen Daten, wie etwa die LSB's der Datenwörter der x- und y-Position können auch Teile des Document Identifiers im SYNC-Pattern codiert werden

Dem positionsabhängigen Code PC(x, y) des zweidimensionalen Oberflächenmusters kann vorteilhaft eine Funktion zugeordnet sein, welche die Nachbarschaftsbeziehungen zu anderen, benachbarten Codeunits beschreibt. Damit lassen sich die Inhalte der benachbarten Codeunits und damit deren Muster vorhersagen, so daß ein Vergleich mit den abgetasteten Daten die Redundanz und somit auch die Abtastsicherheit weiter erhöht.

Insbesondere ist dabei vorteilhaft, wenn durch die dem positionsabhängigen Code PC(x, y) zugeordnete Funktion aus dem positionsabhängigen Code PC(x, y) einer bekannten Codeunit, weitere der positionsabhängigen Codes PC(x, y) berechenbar sind.

Ist mittels der dem positionsabhängigen Code PC(x, y) zugeordneten Funktion aus einem einzigen positionsabhängigen Code PC(x, y) der positionsabhängige Code PC(x, y) sämtlicher benachbarter Codeunits berechenbar, so können beim Abtasten der Oberfläche die zu erwartenden Daten extrapoliert werden. Im einfachsten Fall stellt die Funktion hierbei die kartesischen Koordinaten der Codeunits dar.

Insbesondere ist bei der Darstellung des Oberflächenmusters mit sichtbaren Druckfarben vorteilhaft, wenn die Funktion für die Zuordnung von Codeunits in Form einer Zuordnungstabelle vorliegt. Dies ermöglicht ein "scrambling" der Nachbarschaftsbeziehungen zwischen den Codeunits. Wird die Reihenfolge der Codeunits an der Oberfläche in einer beliebigen Richtung an der Oberfläche verwürfelt, so lassen sich periodisch auftretende Strukturen verhindern, um Übergitter- oder Moirée-Effekte, beispielsweise bei der Erstellung von Kopien vermeiden.

Nach einer bevorzugten Ausführung beträgt die Größe der Codeunit in einer Richtung an der Oberfläche ca. 4mm. Dieser Wert stellt einen guten Kompromiss zwischen sicherer Reproduzierbarkeit und erreichbarer Ortsauflösung dar.

Für die Erfassung des Musters ist ferner eine für das Lesegerät erkennbare Modulation des Musters erforderlich. Für die Darstellung des Oberflächenmusters auf einer passiven Oberfläche eignet sich dabei eine Amplitudenmodulation besonders gut. Insbesondere ist hierbei eine Realisierung mittels eines hell/dunkel-Musters von Formelementen, beispielsweise durch ein Bedrucken mit geeigneten Farben einfach herzustellen. Die konkrete Wahl der Modulation, d.h. der Signalform um eine Stützstelle des Rasters hängt vom verwendeten Druckverfahren ab. Grundsätzlich gilt, dass das verwendete Modulationsverfahren einen für die Erkennung des Optimalgitters genügenden Energieanteil aufweisen muss.

Je nach der Ausführung des Lesegeräts oder der Programmierung für die Datenauswertung können verschiedene Formelemente für eine effiziente Erkennung vorteilhaft sein. Beispielsweise sind Quadrate, Dreiecke, Kreise oder Punkte als Formelemente geeignet.

Die Modulation des Oberflächenmusters kann neben einer Amplitudenmodulation auch eine Phasenmodulation, PSK, umfassen, bei welcher Formelemente, insbesondere Punkte bezüglich eines Bezugsrasters verschoben angeordnet sind.

Ebenso kann die Modulation des zweidimensionalen Oberflächenmusters jedoch auch eine Frequenzmodulation, FSK, umfassen, bei welcher Gruppen von Formelementen mit vordefinierten 2D-Ortsfrequenzen an der Oberfläche angeordnet sind, falls die Mustererfassung und Auswertung beispielsweise hinsichtlich genauer Frequenzmessungen optimiert ist.

Die Mustererkennung und Auswertung kann auch erleichtert werden, wenn das Muster mehr als eine Farbe, insbesondere mehr als einen spektral trennbaren Bestandteil, aufweist und ein spektral trennbarer Bestandteil eine andere Modulation als ein anderer spektral trennbarer Bestandteil aufweist.

Vorteilhaft ist außerdem die Verwendung von Farben, die für das menschliche Auge nicht sichtbar sind. Die spektral trennbaren Bestandteile können das IR-Spektrum und insbesondere IR/Fluoreszenzbanden anregbarer, auf die Oberfläche druckbarer Farben umfassen, so daß die Muster für das menschliche Auge nicht wahrnehmbar, aber von einer angepaßten Infrarotoptik gut zu erkennen sind.

Das Oberflächenmuster muß nicht zwangsläufig aus einem zusammenhängenden Bereich bestehen. Vielmehr kann das Oberflächenmuster auch in mehrere Teile aufgeteilt sein. Insbesondere können sich die Teile auch getrennt voneinander auf einer oder mehreren Oberflächen befinden. Damit kann das Oberflächenmuster an einzelnen Bereichen einer Oberfläche aufgebracht sein oder sich beispielsweise auch auf verschiedenen Gegenständen befinden. Ein solches Muster kann beispielsweise die räumliche Orientierung automatischer Systeme, wie beispielsweise von Robotern unterstützen. Auch kann beispielsweise ein Container in dessen Ecken mit einem solchen Muster versehen sein und so einer vollautomatischen Verladestation mit geeigneter Optik zur Erfassung des Musters als räumliche Orientierungshilfe dienen. Ebenso können bewegliche vollautomatische Systeme ihre eigene Position in einem Raum bestimmen, der an bestimmten Stellen mit einem erfindungsgemäßen Muster ausgestattet ist.

Selbstverständlich ist der Anwendungsbereich eines erfindungsgemäßen Oberflächenmusters nicht auf Anwendungen zur Positionsbestimmung beschränkt. Ebenso können auch andere Informationen im Muster codiert werden. Allgemein kann ein solches Muster auch für die Produktkennzeichung und Produktauszeichnung oder ähnliche Anwendungen, in denen Balken- oder Matrixcodes Verwendung finden, benutzt werden.

Das erfindungsgemäße Oberflächenmuster mit variablem SYNC-Pattern gestattet es, eine sichere Erkennung der im Muster enthaltenen Information bei einem im Vergleich zum Stand der Technik wesentlich verkleinerten Gesichtsfeld vorzunehmen.

Dementsprechend ist im Rahmen der Erfindung auch ein Verfahren zur Decodierung von Daten eines Bereichs eines Oberflächenmusters vorgesehen, welches ein nach einer vorbekannten Bildungsvorschrift ausgebildetes, der Synchronisation dienendes, variables SYNC-Pattern, aufweist und einen positionsabhängigen Code PC(x, y) enthält, wobei der Bereich so klein ist, daß höchstens ein einer Position auf dem Oberflächenmuster zugeordneter positionsabhängiger Code vollständig innerhalb des Bereiches vorhanden ist. In der Regel wird dann das Gesichtsfeld, beziehungsweise der Bereich so klein sein, daß kein positionsabhängiger Code vollständig im Bereich liegt. Ein einer Position auf dem Oberflächenmuster zugeordneter positionsabhängiger Code kann jedoch mit dem erfindungsgemäßen Verfahren immer aus dem Bereich des Oberflächenmusters decodiert werden, indem fehlende Teile des positionsabhängigen Codes durch Teile benachbarter positionsabhängiger Codes, welche im Bereich des Oberflächenmuster liegen, für die Decodierung zur Ergänzung fehlender Teile des positionsabhängigen Codes verwendet werden.

Insbesondere kann das Decodierverfahren so angepaßt sein, daß der Bereich des Oberflächenmusters eine wahlfreie Form hat. Dies bedeutet, daß der Bereich beispielsweise keine quadratische Form oder eine den Codeunits angepaßte Form mehr benötigt. Vielmehr kann beispielsweise die gesamte in einem in der Regel runden Gesichtsfeld einer Leseoptik liegende Information zur Decodierung verwendet werden, währenddessen bei Decodierverfahren nach dem Stand der Technik nur ein Bereich aus dem verfügbaren Gesichtsfeld ausgewählt wird, in dem sich mindestens eine vollständige Codeunit befindet.

Das erfindungsgemäße Muster ist vorzugsweise ebenfalls in Codeunits unterteilt. Das Verfahren kann aber entsprechend so angepaßt sein, daß der Bereich für eine Decodierung einer Codeunit nur so groß zu sein braucht, daß höchstens eine Codeunit vollständig innerhalb des Bereiches liegt.

Im Rahmen der Erfindung liegt auch ein Erkennungs- oder Decodierverfahren, welches insbesondere geeignet ist, die in einem erfindungsgemäßen Oberflächenmuster enthaltenen Daten zu decodieren, wobei das Ergebnis der Decodierung für jede Codeunit zu einer Anzahl von Vektoren vij mit Einträgen, welche den positionsabhängigen Code PC(x, y), einen Document-Identifier, einen Timestamp, eine Errornumber und die Lage der Stiftspitze umfassen, wobei Timestamp den Zeitpunkt der Erfassung einer Codeunit, Errornumber die Anzahl von Fehlern bei der Erfassung des Codes und "Lage der Stiftspitze" den Punkt eines Schreibgerätes an der Oberfläche beschreibt. Mehrere Vektoren vij können dabei zu einem Schriftsegment zusammengefasst werden, falls eine Bedingung, insbesondere die Bedingung, daß der "Stift schreibt", erfüllt ist, um den vom Benutzer durchgeführten Schriftzug zu rekonstruieren.

Die Vektoren vij lassen sich für die Aufzeichnung der Schriftzüge in sinnvoller Weise in zeitlicher Abfolge, entsprechend den von einem Stift mit optischer Erfassungseinrichtung erfassten Daten zusammensetzen.

Um die Sicherheit bei der Ermittlung der Ortskoordinaten der Vektoren vij zu erhöhen, kann ein Schriftsegment mit einem Ortsfilter bearbeitet werden, um etwaige unmögliche Stiftpositionen aufgrund einer falschen Mustererkennung auszufiltern. Als Schriftsegment wird diesbezüglich eine Menge von Vektoren verstanden, die zusammengesetzt zumindest einen Teil eines Schriftzugs bilden. Die zugehörigen Vektoren sind folglich auch bezüglich ihrer Orts- und Timestamp-Koordinaten miteinander verkettet.

Geeignet hierfür ist beispielsweise eine einfache Filterung in der Weise, daß bei erfüllter Bedingung "Stift schreibt" bei der Decodierung nur Bewegungen um +/- eine Codeunit in einer der Richtungen an der Oberfläche zugelassen werden. Wird beispielsweise eine Abtastrate von 300 Bildern pro Sekunde (300 fps) und quadratische Codeunits mit einer Größe von 4mm$^2$ verwendet, so ergibt sich als maximal erfassbare Geschwindigkeit für die Schrifterkennung mit dieser Ortsfilterung eine Geschwindigkeit von etwa 1,2 m/s, was selbst bei schnellen Hand- beziehungsweise Stiftbewegungen kaum überschritten werden kann.

Es können aber auch geringere Abtastraten, beispielsweise mit mehr als 100 fps oder mehr als 200 fps sinnvoll sein, um die Anforderungen an die Datenverarbeitung zu verringern, so daß preisgünstigere oder kompaktere Hardwarekomponenten eingesetzt werden können.

Neben der Ortsfilterung ist auch die Verwendung eines Fehlerkorrekturverfahrens vorteilhaft, falls die Daten im Oberflächenmuster redundant codiert sind. Insbesondere sind dabei Reed-Solomon- oder Hammingcodes zur Fehlerbeseitigung geeignet. Als guter Kompromiss zwischen Erkennungssicherheit und Codelänge erweist sich dabei eine redundante Codierung, mit der zwei Fehler pro Koordinate erkannt und ein Fehler pro Koordinate erkannt und beseitigt werden kann.

Selbst bei Einsatz eines Fehlerkorrekturverfahrens kann es jedoch zu einer fehlerhaften Erkennung der einer Codeunit zugeordneten Vektoren kommen. Dieser Fehler kann aber seinerseits durch eine Ortsfilterung erkannt werden. Ein solches falsch erkanntes Ereignis kann vorteilhaft unter Verwendung der fehlerfreien oder korrigierbaren Vektoren zumindest näherungsweise berichtigt werden. Wird beispielsweise bei der Ortsfilterung festgestellt, daß eine Codeunit Differenzen liefert, die größer als eins sind, dann wird der zugeordnete Vektor ausgeschlossen und dessen positionsabhängiger Code PC(x, y) durch Interpolation der zeitlichen Nachbarn ersetzt.

Wird der oben beschriebene Ortsfilter eingesetzt, bei dem nach der Bedingung gefiltert wird, daß bei der Decodierung nur Bewegungen um +/- eine Codeunit in einer der Richtungen an der Oberfläche zugelassen werden, so stellt dieser Filter bei fehlerhafter Erkennung einer Codeunit eine Differenz größer als eins zu den zeitlich benachbarten Codeunits fest und der fehlerhaft erkannte positionsabhängige Code wird interpoliert.

Für genaue Rekonstruktion unvollständig oder fehlerhaft erfaßter Daten einer Koordinate kann auch besonders vorteilhaft ein Kontextanalyse- oder Postprocessing-Verfahren eingesetzt werden. Wird eine Codeunit nicht oder unvollständig oder fehlerhaft erkannt, so kann aus Vergleich mit zeitlich und/oder örtlich benachbarten, erkannten Codeunits der wahrscheinlichste Code für die fragliche, zu entschlüsselnde Codeunit ermittelt und so der exakte Code mit hoher Wahrscheinlichkeit rekonstruiert werden. Dies funktioniert auch, wenn beispielsweise kein SYNC-Pattern ermittelt werden konnte. Auch in diesem Fall können mögliche SYNC-Pattern-Positionen und Orientierungen getestet werden und die wahrscheinlichste Position und Orientierung hinsichtlich (räumlich und/oder zeitlich) benachbarter Codeunits oder entschlüsselter Vektoren als Grundlage für die Entschlüsselung der weiteren in der Codeunit enthaltenen Information benutzt werden. Dazu werden verschiedene Codehypothesen aufgestellt und diese mit den Informationen zeitlich und/oder räumlich benachbarter Codeunits verglichen werden. Als benachbart werden in diesem Zusammenhang nicht notwendigerweise die unmittelbar benachbarten Codeunits aufgefaßt. Vielmehr können mehrere Codeunits zum Testen der Codehypothese verwendet werden.

Die im Oberflächenmuster enthaltenen Daten des Document-Identifier werden vorzugsweise aus verschiedenen Teilen einer im Muster enthaltenen 8 x 8 bit-Oberflächeninformation extrahiert. Eine Codeunit kann beispielsweise 8 bit des Document-Identifiers enthalten, wobei nicht jede Codeunit den gleichen Teil eines Document-Identifiers enthalten muß. Die Information kann vielmehr auch auf mehrere Codeunits verteilt sein. Sinnvoll ist es beispielsweise, vier oder mehr verschiedene Identifier zu verwenden. Beispielsweise können die Teile des Document-Identifiers im Falle von 4 Teilen mit den LSB's der codierten x- und y-Koordinaten in der Codeunit verknüpft sein. Die Codeteile können dann mit Zuhilfenahme des jeweiligen Timestamp- und Positionscodes richtig zusammengesetzt werden. Auf diese Weise lassen sich durch Aufteilung auch detaillierte Informationen in kleinen Codeunits mit beschränktem Informationsgehalt unterbringen. Dann können sämtliche pro Seite abgetasteten Codes mit Timestamp und Positionscode zusammengesetzt werden.

Um eine sichere Erkennung des Document-Identifier zu gewährleisten, kann für die Daten des Document-Identifier auch eine mehrfache Erkennung vorgenommen werden.

Für preisgünstige Anwendungen in der Industrie kann das zweidimensionale Oberflächenmuster auch auf einem Klebestreifen aufgedruckt sein, welcher beispielsweise auf Anlagenteile aufgeklebt werden kann. Damit lassen sich unter anderem ältere Maschinen, insbesondere solche ohne Positionserkennung kostengünstig nachrüsten. Eine solche kostengünstige Positionserkennung kann beispielsweise für flexible Transportsysteme eingesetzt werden. Für Werkzeugmaschinen oder Meßmikroskope kann eine hochpräzise Positionierung bei Einsatz des Codes auf Chromschablonen erreicht werden, hierzu wird die Schablone im Durchlicht durchstrahlt und mit einer Kamera abgetastet, der xy- Code wird mit Subpixelauflösung bereitgestellt. Der Code kann ebenso für 3D- Anwendungen verwendet werden, indem durch zwei oder weitere Kameras mehrere Codeflächen zugleich abgetastet werden.

Bei einem Schreibgerät, welches für die Ermittlung der Position der Schreibspitze an einer Oberfläche insbesondere für ein oben beschriebenes Verfahren zur Decodierung von in einem erfindungsgemäßen Oberflächenmuster enthaltenen Daten mit einer optischen Bildaufzeichnungseinrichtung ausgestattet ist, fällt der Bildmittelpunkt des von der optischen Bildaufzeichnungseinrichtung erfassten Gesichtsfeldes in der Regel nicht mit dem Berührungspunkt der Schreibspitze zusammen. Im allgemeinen wird das Schreibgerät auch nicht in einer festgelegten Orientierung zur Oberfläche gehalten werden, sondern abhängig von der Handhaltung während des Schreibens mit unterschiedlichen Neigungswinkeln zur Unterlage gehalten werden. Dies führt dazu, daß sich abhängig von der Neigung des Schreibgeräts der Abstand der von der optischen Bildaufzeichnungseinrichtung erfassten Codeunits zum Auflagepunkt des Schreibgeräts auf der Unterlage ändert. Infolgedessen können sich die Form und absolute Lage des aufgezeichneten Schriftzugs von dem mit der Schreibspitze auf die Oberfläche geschriebenen Schriftzug unterscheiden. Die sich daraus ergebenden Verzerrungen verfälschen das Schriftbild und sind daher unerwünscht.

Um diese Verzerrungen zu verhindern, sieht die Erfindung auch ein Verfahren zur Ermittlung der Position einer Spitze eines Schreibgerätes mit optischer Bildaufzeichnungseinrichtung an einer Oberfläche, insbesondere für ein Verfahren zur Decodierung von in einem Oberflächenmuster enthaltenen Daten vor, bei welchem das dem Oberflächenmuster zugrunde liegende Raster mit dem vom Schreibgerät aufgezeichneten Bild verglichen und eine parallaktische Verzeichnung ermittelt wird. Aus der parallaktischen Verzeichnung werden die Winkel der Verkippung einer definierten Achse des Schreibgerätes relativ zur Oberfläche berechnet und

aus der Verkippung ein Verschiebungsvektor relativ zu einer Achse der Bildaufzeichnungseinrichtung berechnet.

Für das Verfahren zur Ermittlung der Schreibspitzenposition ist es dabei vorteilhaft, wenn die definierte Achse des Schreibgerätes durch die Stiftspitze des Schreibgerätes und im wesentlichen in Richtung von dessen längster Erstreckung verläuft, da durch eine solche Festlegung der definierten Bezugsachse die Berechnung des Verkippungswinkels erleichtert wird. Ebenso ist es vorteilhaft, als Achse der Bildaufzeichnungseinrichtung die optische Achse des Abbildungssystems der Bildaufzeichnungseinrichtung zu verwenden. Die Lage der Stiftspitze kann dann aus dem Schnittpunkt der optischen Achse der Bildaufzeichnungseinrichtung mit der Oberfläche und Addition des Verschiebungsvektors zu diesem Schnittpunkt ermittelt werden.

Die Erfindung wird nachfolgend anhand bevorzugter Ausführungsformen und unter Bezugnahme auf die beigefügten Zeichnungen detaillierter beschrieben.

Es zeigen

Fig. 1       eine Ausschnitt aus einem Oberflächenmuster gemäß einer Ausführungsform,
Fig. 2       die dem in Fig. 1 gezeigten Ausschnitt zugrundeliegende Verteilung des SYNC-Patterns,
Fig. 3       eine bevorzugte Ausführungsform einer Codeunit,
Fig. 4       eine Darstellung des Prinzips der SYNC-Pattern-Erkennung mit Horizontal- und Vertikalkomponenten,
Fig. 5       eine Veranschaulichung des Kreuzkorrelationstests zur SYNC-Pattern-Erkennung,
Fig. 6       eine Illustration eines Ergebnisses eines Kreuzkorrelationstests,
Fig. 7       schematisch ein Decodierverfahren anhand eines Ausschnitts des Oberflächenmusters,
Fig. 8       eine Illustration des Postprocessing-Verfahrens bei Lesefehlern.
Fig. 9A      eine Aufnahme eines Ausschnitts des Oberflächenmusters mit 100 x 100 Bildpunkten,
Fig. 9B      aus einer Aufnahme eines Ausschnitts des Oberflächenmusters extrahierte Kontursegmente,
Fig. 10      ein parallaktisch verzeichnetes Oberflächenmuster, und
Fig. 11      den Strahlengang durch die Leseoptik entlang einer Ebene senkrecht zur Bildebene.

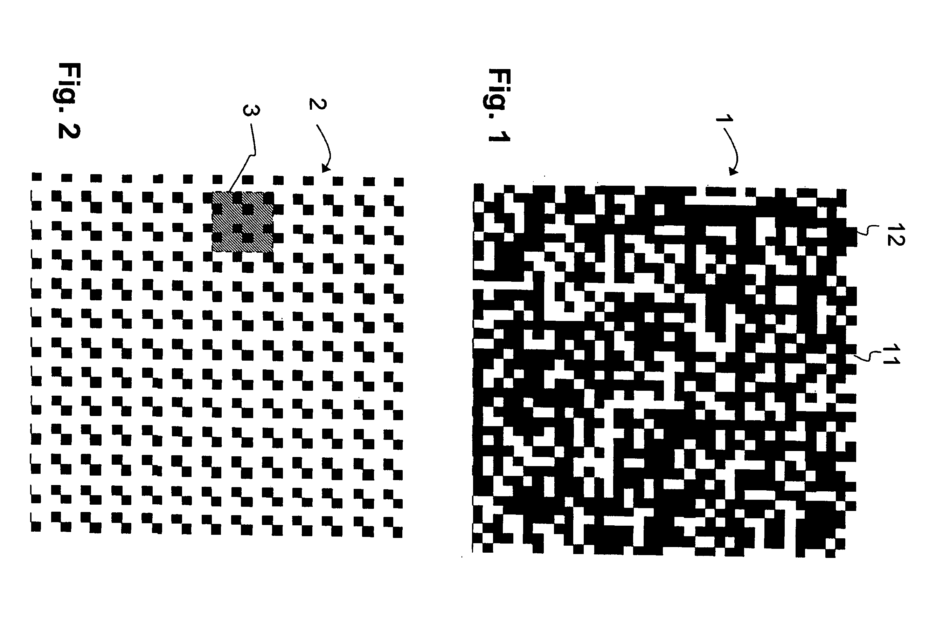

Fig. 1 zeigt einen Ausschnitt aus einem Oberflächenmuster 1 gemäß einer Ausführungsform der Erfindung. Bei dieser Ausführungsform wird das zweidimensionale Oberflächenmuster 1 durch eine Amplitudenmodulation in Form eines hell/dunkel-Musters von Formelementen in der Form von Quadraten 11 und 12 gebildet. Helle und dunkle Quadrate 11 und 12 repräsentieren dabei Bits mit den Werten Null und Eins. Das Muster entspricht dabei nicht notwendigerweise dem vom menschlichen Auge erfassten Eindruck. Vielmehr kann für das Oberflächenmuster auch eine infrarotabsorbierende Farbe verwendet werde, so dass das Muster für das menschliche Auge nicht wahrnehmbar ist.

Die Erfassung von Positionsdaten setzt zunächst die Erkennung der durch die hellen und dunklen Quadrate repräsentierten Bits voraus. In einem weiteren Schritt muß das Bitmuster in Codeunits unterteilt werden, um die Bits den in den Codeunits umfassten Informationen von Datenvektoren zuordnen zu können. Die Lage der Codeunits im Oberflächenmuster 1 wird durch ein SYNC-Pattern festgelegt, welches ebenfalls im Oberflächenmuster enthalten ist.

Da das Optimalgitter wesentlich genauer als der Abstand der Codemodule berechnet werden kann (praktische Ergebnisse liefern bei 0,4 mm Codemodulgröße und gutem Kontrast einen Approximationsfehler von weniger als 0,1 mm), wird die Lage des Schnittpunkts der optischen Achse mit dem Papier ebenfalls mit einer Auflösung besser 0,1 mm bestimmt. Aus der Lage der Ebene und der bekannten Geradengleichung der Mine erhält man den gewünschten Schnittpunkt mit einer guten Auflösung von besser als 200 dpi.

Fig. 2 zeigt das dem in Fig. 1 gezeigten Ausschnitt des Oberflächenmusters zugrundeliegende SYNC-Pattern 2. Die dunkel gezeigten Quadrate zeigen die Lage der zum SYNC-Pattern gehörenden Bits. Dies bedeutet jedoch nicht, dass das Muster aus dunklen Quadraten oder gleichartigen Bits besteht. Die Quadrate geben vielmehr nur die Lage der zum SYNC-Pattern gehörenden Bits an. Die Farbe des SYNC-Patterns, beziehungsweise ob es sich aus Nullen oder Einsen zusammensetzt, ist lokal von der im SYNC-Pattern codierten Information, beziehungsweise der nach einer vorbekannten Bildungsvorschrift gebildeten Variation des Pattern abhängig.

Gemäß einer bevorzugten Ausführungsform besteht eine Codeunit aus einem Quadrat aus 6 x 6 Bits. Eine solche Codeunit 3 ist in Fig. 2 als schraffierter Bereich dargestellt. Die Codeunits grenzen ohne Zwischenraum direkt aneinander an, so dass das Oberflächenmuster hinsichtlich der zweidimensionalen Raumausnutzung optimiert ist.

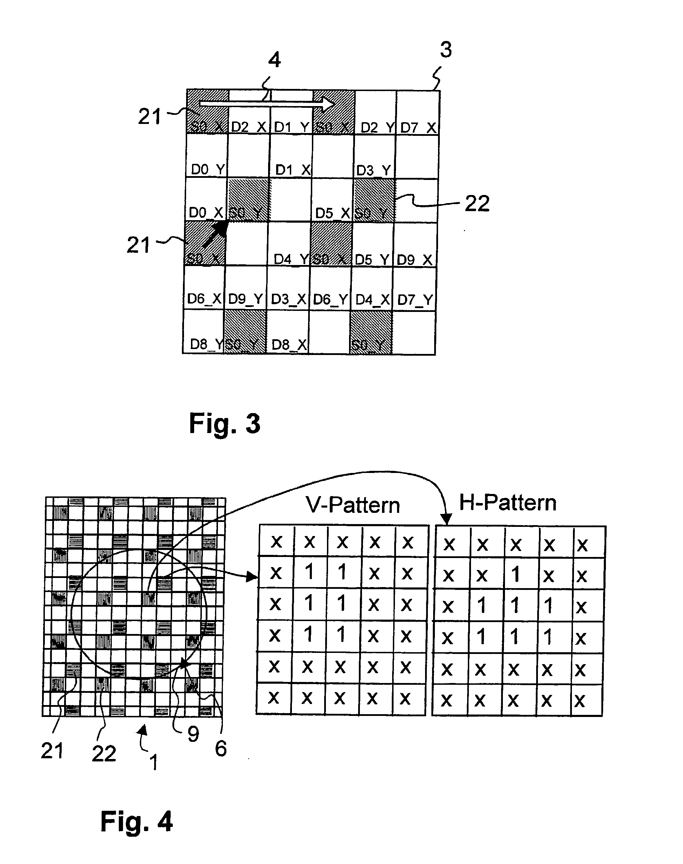

Fig. 3 zeigt eine bevorzugte Ausführung einer 6 x 6-Bit großen Codeunit 3. Die schraffierten Bereiche 21 sind Bits des Synchronisationspattern für horizontale Synchronisation (S0_X) und vertikale Synchronisation (S0_Y). Der Pfeil 4 zeigt die Richtung der Horizontalen. Die Bits des SYNC-Patterns 21, S0_X, beziehungsweise S0_Y können dabei die Least Significant Bits der Datenwörter für die X-, beziehungsweise Y-Position sein, so dass die S0_X und S0_Y Bits des SYNC-Patterns in X- und Y-Richtung von Codeunit zu Codeunit fortschreitend alternieren. Auf diese Weise wird ein variables SYNC-Pattern zur Verfügung gestellt. Die X- und Y-Positionen können bei Verwendung von LSB's als SYNC-Pattern in dem in Fig. 3 gezeigten Code als 11-Bit Datenwörter codiert werden.

Geht man beispielhaft von einer Kantenlänge der Codeunit von 4 mm aus, so liegen bei einem Eingabefeld in der Größe eines DIN-A4-Blattes in einer Richtung maximal 75 Codeunits. Dafür wäre jedoch eine 7-Bit Codierung für die Positionsbestimmung ausreichend. Die zur Verfügung stehenden 11 Bit können dann vorteilhaft für eine redundante Codierung verwendet werden.

Die folgende Tabelle listet eine bevorzugte modifizierte Hammingcodierung für eine 7-Bit-Positionscodierung und drei Redundanzbits auf:

| Argument (x,y) | Dezimalcode | Binärcode | | | | | | | | | |
|---|---|---|---|---|---|---|---|---|---|---|---|
| | | D9 | D8 | D7 | D6 | D5 | D4 | D3 | D2 | D1 | D0 |
| 0 | 0 | 0 | 0 | 0 | 0 | 0 | 0 | 0 | 0 | 0 | 0 |
| 1 | 7 | 0 | 0 | 0 | 0 | 0 | 0 | 0 | 1 | 1 | 1 |
| 2 | 25 | 0 | 0 | 0 | 0 | 0 | 1 | 1 | 0 | 0 | 1 |
| 3 | 30 | 0 | 0 | 0 | 0 | 0 | 1 | 1 | 1 | 1 | 0 |
| 4 | 42 | 0 | 0 | 0 | 0 | 1 | 0 | 1 | 0 | 1 | 0 |
| 5 | 45 | 0 | 0 | 0 | 0 | 1 | 0 | 1 | 1 | 0 | 1 |
| 6 | 51 | 0 | 0 | 0 | 0 | 1 | 1 | 0 | 0 | 1 | 1 |
| 7 | 75 | 0 | 0 | 0 | 1 | 0 | 0 | 1 | 1 | 0 | 1 |
| 8 | 82 | 0 | 0 | 0 | 1 | 0 | 1 | 0 | 0 | 1 | 0 |
| 9 | 85 | 0 | 0 | 0 | 1 | 0 | 1 | 0 | 1 | 0 | 1 |
| 10 | 97 | 0 | 0 | 0 | 1 | 1 | 0 | 0 | 0 | 0 | 1 |
| ... | ... | | | | | | | | | | |
| ... | ... | | | | | | | | | | |

Dieser modifizierte Hammingcode weist einen Hamming-Abstand von 3 Bits auf, so dass 2 fehlerhafte Bits erkannt und ein einfacher Bitfehler korrigiert werden kann.

Ein 8-Bit Datenwort kann beispielsweise so codiert werden, dass das LSB des Datenworts als SYNC-Pattern dient und die verbleibenden 7 Bit gemäß dem in der Tabelle angegebenen Schema redundant codiert werden.

In Fig. 4 ist das Prinzip der Mustererkennung des SYNC-Patterns 2 dargestellt. In einer bevorzugten Ausführungsform des Oberflächenmusters ist das SYNC-Pattern in ein horizontales Pattern (H-Pattern) und ein vertikales Pattern (V-Pattern) aufgeteilt. Zur richtigen Erkennung der Pattern wird die Korrelation einer geeigneten Maske in der Form des SYNC-Pattern mit dem innerhalb des Gesichtsfelds 9 der optischen Signalaufzeichnungseinrichtung liegenden Teils 6 des Musters 1 verglichen. Die Abbildung zeigt eine richtige Erkennung des Musters, bei der eine maximale Trefferanzahl von 6 Übereinstimmungen für das H-Pattern und 7 Übereinstimmungen für das V-Pattern gefunden wurde, also insgesamt 13 Übereinstimmungen. Unter Voraussetzung eines zulässigen Bitfehlers wird die Anzahl der Übereinstimmungen auf N-1 festgelegt, wobei N die Anzahl der gefundenen Übereinstimmungen bezeichnet.

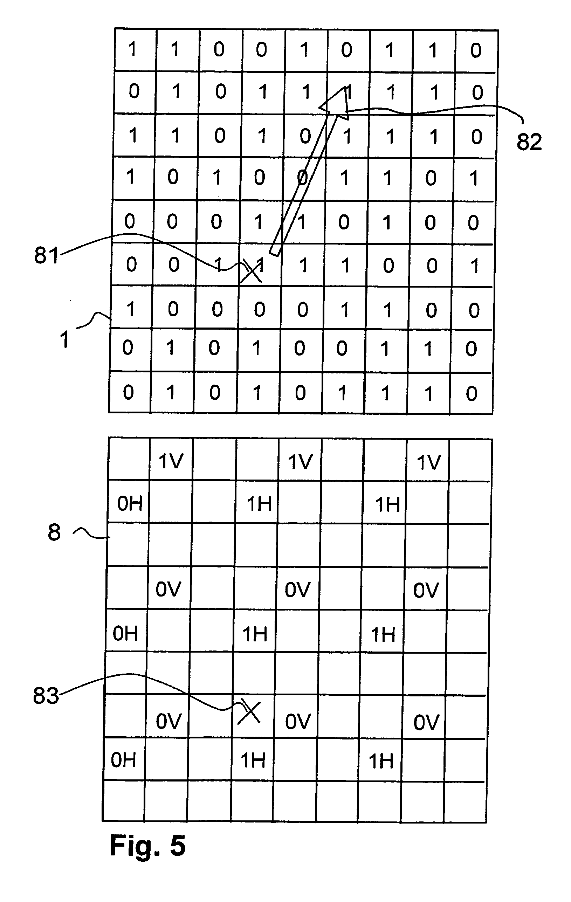

Die Ermittlung der Lage des SYNC-Pattern mittels der besten Übereinstimmung des Oberflächenmusters mit einer Maske geschieht bevorzugt über einen Kreuzkorrelationstest, der sich anhand der in Fig. 5 gezeigten Maske veranschaulichen läßt. Die Maske 8 zeigt ein SYNC-Pattern, bei welchem die horizontalen und vertikalen Komponenten in jeder zweiten Spalte alternieren. Die Einträge der Maske sind mit dem Bitwert 0 oder 1, gefolgt von der Bezeichnung H, beziehungsweise V für die horizontale, beziehungsweise vertikale SYNC-Komponente. Bei einer Größe der Codeunit von 6 x 6 Bit ergeben sich damit $(2 \times 6)^2 = 144$ verschiedene Möglichkeiten, die Maske mit dem Oberflächenmuster zu vergleichen. Die Lage des Ursprungs 83 der Maske wird mit einem Verschiebungsvektor 82 angegeben, der von einem Ursprung 81 aus auf ein Modul zeigt, welches in diesem Beispiel mit einer 6 x 6-Codeunit weniger als 12 Einheiten in X-Richtung und Y-Richtung vom Ursprung entfernt ist. Als Ursprung kann beispielsweise das Modul verwendet werden, welches sich am nächsten am Zentrum des Gesichtsfelds befindet.

Ist ferner die azimuthale Orientierung des Lesegerätes zur Unterlage nicht bekannt, etwa falls es sich beim Lesegerät um einen Schreibstift mit Leseoptik handelt, der in der Hand frei gedreht werden kann, so sind zusätzlich zu den 144 Einstellmöglichkeiten noch 4 verschiedene azimuthale Orientierungsbereiche möglich, die jeweils um 90° gegeneinander verdreht sind. Damit erhöht sich die Anzahl der möglichen Lagen des SYNC-Patterns auf 4 x 144 = 576 Möglichkeiten. Zu jeder der möglichen Maskenpositionen werden die Anzahl der Übereinstimmungen und der Abweichungen des Bitmusters der Maske 8 mit dem Bitmuster des Oberflächenmusters 1 gezählt und das Ergebnis in einer Liste abgespeichert. Danach wird zu jedem der Ergebnisse die Wahrscheinlichkeit bestimmt, das richtige SYNC-Pattern gefunden zu haben. Die Wahrscheinlichkeit W, dass eine bestimmte Position der Maske die Lage des SYNC-Pattern wiedergibt, beträgt dabei W=Z1/(Z1+Z2), wobei Z1 die Anzahl der Übereinstimmungen und Z2 die Anzahl der Abweichungen bezeichnen.

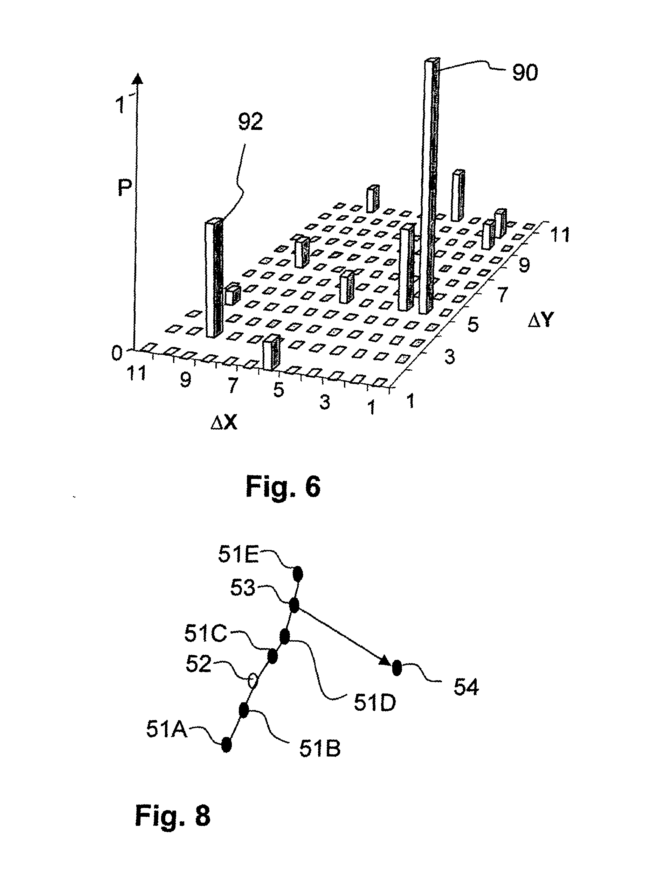

Fig. 6 zeigt ein mögliches Ergebnis einer solchen Kontextanalyse in Form eines Balkendiagramms für eine der 4 möglichen Orientierungen. Die Wahrscheinlichkeit P für die richtige Lage des Verschiebungsvektors ist in Fig. 6 als Funktion der Komponenten $\Delta X$ und $\Delta Y$ aufgetragen. Die höchste Wahrscheinlichkeit 90 ergibt sich in diesem Beispiel bei einem Verschiebungsvektor $(\Delta X,\Delta Y)=(2,5)$. Für die Festlegung der Lage des SYNC-Patterns ist es unter Umständen sinnvoll, dass mehrere wahrscheinliche Möglichkeiten aus der Liste ausgegeben werden. Beispielsweise können das wahrscheinlichste Ergebnis 90 und das zweitwahrscheinlichste Ergebnis 92 ausgegeben werden.

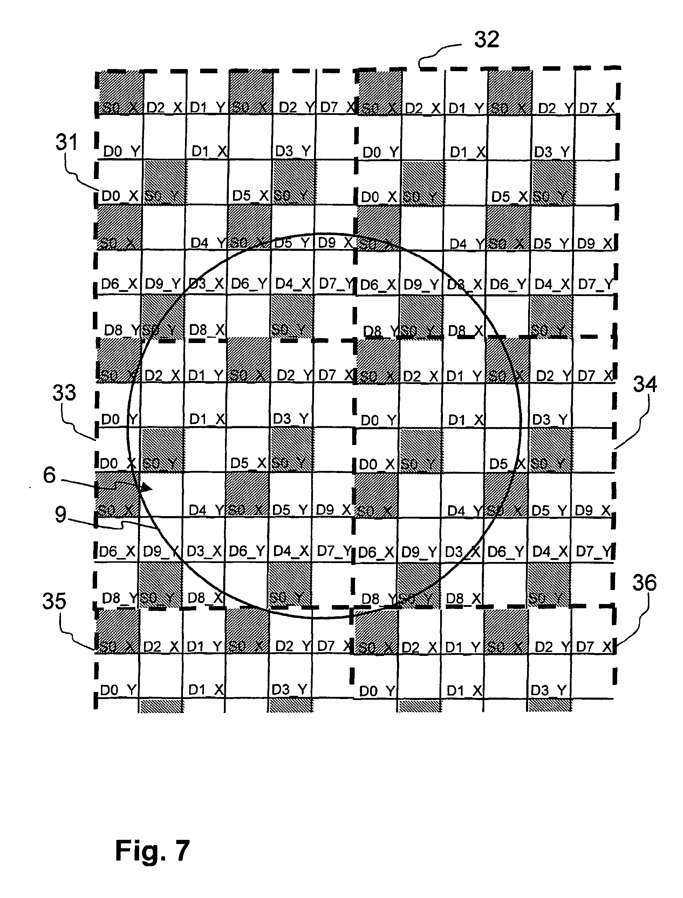

Fig. 7 zeigt einen Ausschnitt eines erfindungsgemäßen Oberflächenmusters 1 mit 6 Codeunits 31 bis 36, sowie einen Bereich 6, welcher vom Gesichtsfeld 9 einer Leseoptik erfaßt wird. Die Codeunits 31 bis 36 sind in diesem Beispiel so wie die in Fig. 3 gezeigte Codeunit 3 aufgebaut. Die Grenzen zwischen den Codeunits sind als gestrichelte Linien hervorgehoben.

Der Bereich 6, beziehungsweise das Gesichtsfeld ist so klein, daß sich keine der Codeunits bei der beispielhaft gewählten Position vollständig innerhalb des Bereichs 6 befindet. Von der Codeunit 33 befinden sich verglichen mit den benachbarten Codeunits die meisten Module oder Bits innerhalb des Bereichs 6. Für eine Auswertung können Module oder Bits verwendet werden, welche noch mit mindestens der Hälfte ihrer Fläche innerhalb des Bereichs 6 liegen. Dementsprechend befinden sich für eine Positionsbestimmung der Codeunit 33 die Bits D0_Y D0X, D6_X, D8_Y, D8_X und D9_Y außerhalb des Bereichs 6 und werden von der Leseoptik oder dem Auswertealgorithmus nicht erfaßt. Jedoch können die fehlenden Bits für eine vollständige Positionsbestimmung aus den benachbarten Codeunits 31, 32 und 34 gewonnen werden. Insbesondere können D0_Y D0_X, D6_X und D8_Y aus Codeunit 34, D9_Y aus Codeunit 32 und D8_X aus Codeunit 31 ermittelt werden. Die Bitwerte müssen dabei nicht mit den korrespondierenden Bitwerten der benachbarten Codeunits übereinstimmen. Da die Bildungsvorschrift, mit welcher das Muster codiert wird, bekannt ist, können die fehlenden Bitwerte durch Vergleich der Bitwerte der Nachbarn mit der Bildungsvorschrift ergänzt werden.

Fig. 8 zeigt eine Illustration der Kontextanalyse, beziehungsweise des Postprocessing-Verfahrens bei fehlerhaft oder unvollständig erkanntem positionsabhängigem Code. Durch das Erkennen des positionsabhängigen Codes werden beim Abtasten der Oberfläche mit dem Lesegerät die Oberflächenpositionen 51A bis 51E erkannt. Durch Lesefehler, wie etwa, wenn die Oberfläche Flecken aufweist, welche Teile des positionsabhängigen Codes abdecken und unkenntlich machen, kann es geschehen, dass der Code zu einer Oberflächenposition 52 nicht erkannt werden kann. Insbesondere tritt ein solcher "no-read" dann auf, wenn kein SYNC-Pattern gefunden werden konnte. In diesem Fall werden die Daten der umliegenden, korrekt erkannten Oberflächenpositionen verwendet, um die nicht erkannte Position auf dem Oberflächenmuster zu rekonstruieren. Die Rekonstruktion der nicht erkannten Position 52 basiert darauf, die Position aus den Positionsdaten der richtig erkannten, zeitlich benachbart zur Position 52 aufgenommenen Oberflächenpositionen 51B und 51C zu interpolieren. Sind vom Code innerhalb des Gesichtsfelds 9 zur Position 52 noch Teile erkennbar gewesen, so können diese Teile mit der interpolierten Position verglichen werden und eventuell aus der durch die Interpolation bestimmte ungefähre Lage und den Codeteilen doch noch die exakte Lage des Punktes oder der Position 52 bestimmt werden. In der Kontextanalyse werden also aus dem von der Leseoptik erfassten Bereich durch Ergänzung oder Abwandlung des Musters verschiedene Codehypothesen gebildet, wobei dann der wahrscheinlichste Code für die zu entschlüsselnde Codeunit ermittelt wird, indem die verschiedenen Codehypothesen mit decodierten Informationen zeitlich und/oder räumlich benachbarter Codeunits verglichen werden. Danach wird die wahrscheinlichste Codehypothese ausgewählt.

Ebenso können Lesefehler vorkommen, bei denen eine tatsächliche Position 53 des Lesegeräts einer vermeintlichen Position 54 zugeordnet wird. Dies ist beispielsweise dann der Fall, wenn ein Bit des positionsabhängigen Codes falsch erkannt wird, so dass Position 54 gegenüber der tatsächlichen Position 53 in x- oder y-Richtung versetzt ist, oder wenn ein falsches oder nicht eindeutiges SYNC-Pattern zugrundegelegt wird. In diesem Fall wird Position 54 im Hinblick auf deren zeitlich benachbart aufgenommenen Positionen 51D und 51E als unwahrscheinlich erkannt.

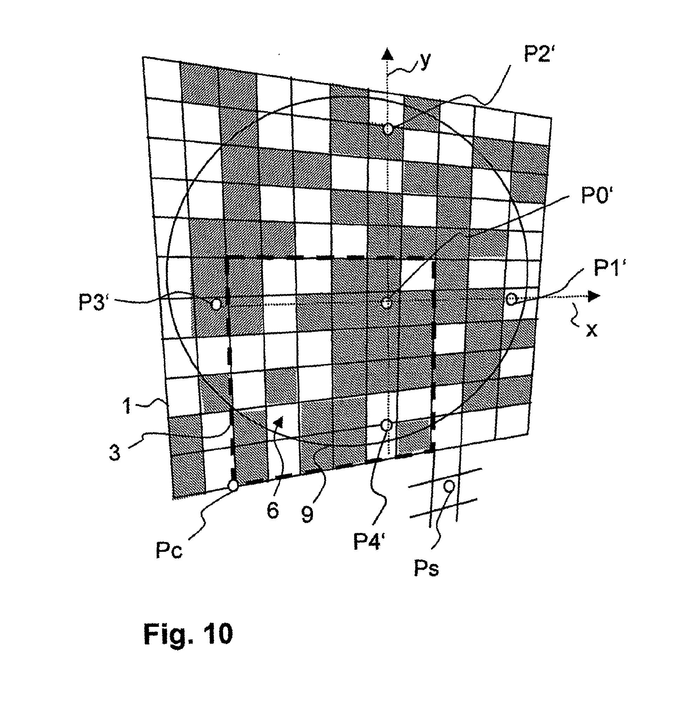

Im folgenden wird die Erkennung des dem Muster zugrundeliegenden Rasters und die Bestimmung der Position der Stiftspitze bei einer Schrägstellung des Lesegeräts relativ zur Normalenrichtung der Oberfläche beschrieben. Fig. 10 zeigt ein parallaktisch verzeichneten Ausschnitt eines Oberflächenmusters 1 mit einem durch das Gesichtsfeld 9 der Leseoptik bestimmten Bereich 6. Die parallaktische Verzeichnung entsteht durch eine Verkippung der Leseoptik zur Objektebene. Im allgemeinen Fall wird ein Quadrat in der Objektebene in ein allgemeines Viereck abgebildet.

Das Optimalgitter wird aus dem in Fig. 6 gezeigten Bild aus einer Vielzahl von Stützstellen berechnet. Dadurch ist die Messgenauigkeit (Offsetrauschen) des Rasters deutlich günstiger als es vom Signal/Rauschverhältnis des Systems zu erwarten wäre.

Durch die im Anwendungsfall erhebliche parallaktische Verzeichnung des Optimalgitters entsteht eine kontinuierliche Frequenzänderung der Gitterkonstante um ca. +/-20% in beiden Richtungen. Die parallaktische Verzeichnung entsteht dabei durch die Winkellage des Stifts, beziehungsweise des Lesegeräts. Damit ist das Optimierungsproblem für das Gitter eine Funktion von 5 Variablen. Drei davon kennzeichnen Freiheitsgrade durch Drehung des Stifts, zwei weitere sind Verschiebungsfreiheitsgrade. Bei einem sehr großen Gesichtsfeld kann auch noch die Verzeichnung des Objektivs zu berücksichtigen sein.

Die Suche des Optimalgitters beginnt mit einer Bandpassfilterung des Bildes in der Nähe der Samplingfrequenz. Anschließend wird die lokale Signalleistung geschätzt und dann ein Algorithmus für die statistische Richtungserkennung angewendet.

Die Algorithmen zur Suche des Optimalgitters können grundsätzlich auf beliebige Modulformen angepasst werden, die größte Stabilität wird jedoch bei einem schachbrettartigen Muster erreicht.

Zur Decodierung wird dann die Periode, beziehungsweise die damit verbundene Modulgröße bestimmt. Anschließend wird die Phase des Musters bestimmt und das Optimalgitter mit optimal angepassten Geraden konstruiert.

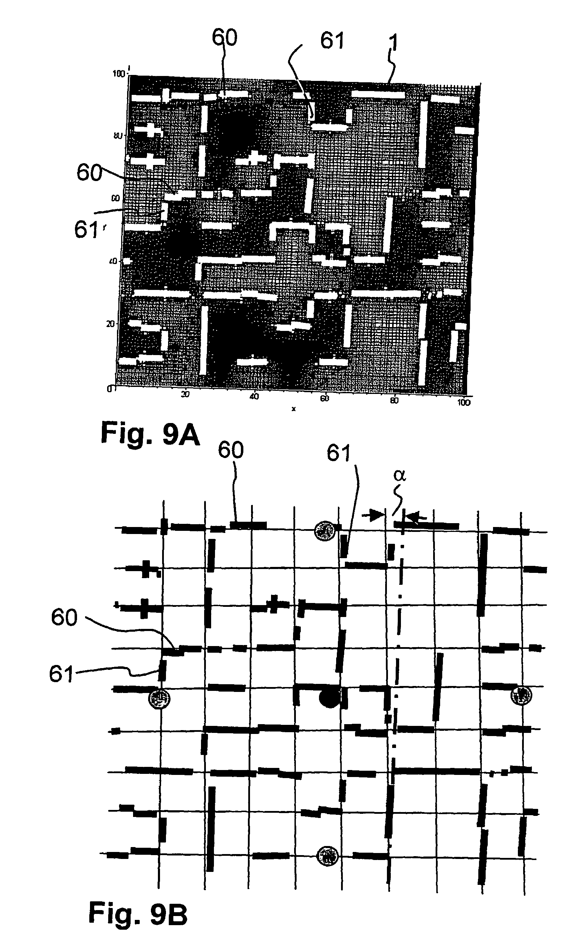

Die Figuren 9A und 9B veranschaulichen ein für die Rechenzeit besonders günstiges Verfahren für die Rastererkennung. Fig. 9A zeigt eine Aufnahme eines Ausschnitts des Oberflächenmusters 1 mit 100 x 100 Bildpunkten. Zunächst werden in einer Richtung Kontursegmente 60 berechnet. Anschließend wird dieser Vorgang in einer dazu senkrechten Richtung durchgeführt, so daß zu den Kontursegmenten 60 senkrechte Kontursegmente 61 vorliegen.

Fig. 9B zeigt die aus dem Bild des Oberflächenmusters extrahierten Kontursegmente 60 und 61. Die Kontursegmente 60 und 61 werden zu digitalen Strecken zweidimensional interpoliert, so daß sich ein an das Bild des Oberflächenmusters optimal angepaßtes Raster, beziehungsweise ein Optimalgitter ergibt.

Mit dem auf diese Weise konstruierten Raster können dann die optimalen Abtastpunkte in den Mittelpunkten der Rastereinheiten gefunden und das Grauwertbild abgetastet werden. Diese Abtastwerte werden dann quantisiert und binarisiert, so dass eine Bitmatrix entsteht. Die Lage der Mittelpunkte der Module wird dabei vor der Quantisierung aus der Gesamtheit der vorliegenden Messungen geschlossen.

Nach der Quantisierung kann dann die Erkennung des SYNC-Patterns und die Decodierung der quantisierten Daten wie oben beschrieben durchgeführt werden.

Aus der Lage des Optimalgitters und der parallaktischen Verzeichnung kann weiterhin die Lage Ps der Stiftspitze, die in dem in Fig. 10 gezeigten Beispiel außerhalb des Gesichtsfelds 9 liegt, approximiert werden. Nachdem die Decodierung der Codeunit erfolgt ist, wird die Position der Stiftspitze interpoliert. Hierzu werden minimal 3 besser jedoch mehr außen liegende Stützstellen des Optimalgitters verwendet. In Fig. 10 sind beispielhaft 4 Stützstellen P1', P2', P3' und P4' dargestellt. Durch die Zentralprojektion des Objektivs kann die Lage der n als Stützstellen ausgewählten Bildpunkte mit bekanntem Abstand zur optischen Achse in n Projektionsgeraden mit bekanntem Anstieg überführt werden. Hieraus läßt sich ein Gleichungssystem formulieren, das diejenigen Schnittpunkte der optischen Achse mit der Papierebene liefert, die den kleinsten mittleren quadratischen Fehler für die Abstände zwischen ihnen in der Objektebene ergeben. Diese Abstände sind durch die Rasterkonstante und die Lage des Optimalgitters bekannt.

Da das Optimalgitter wesentlich genauer als der Abstand der Codemodule berechnet werden kann -wie oben erwähnt kann bei bei 0,4 mm Codemodulgröße und gutem Kontrast ein Approximationsfehler von weniger als 0,1 mm erreicht werden-, kann die Lage des Schnittpunkts der optischen Achse mit dem Papier ebenfalls mit einer Auflösung besser als 0,1 mm bestimmt werden. Aus der Lage der Ebene und der bekannten Geradengleichung der Mine erhält man den gewünschten Schnittpunkt mit einer guten Auflösung von besser 200 dpi.

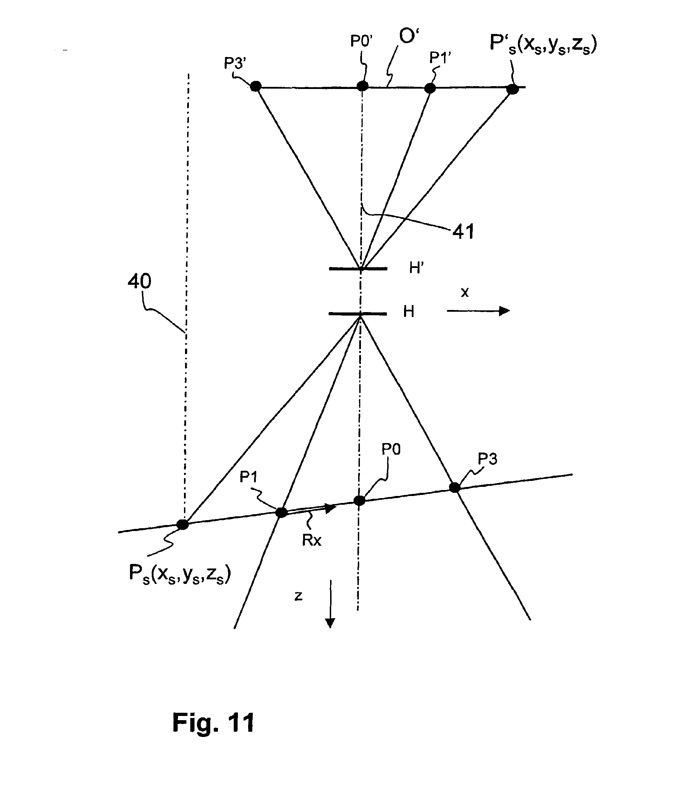

Das Verfahren ist nachfolgend genauer anhand von Fig. 11 beschrieben, in welcher der Strahlengang durch die Leseoptik veranschaulicht ist. Die Abstände der Rasterpunkte des Optimalgitters sind auf dem Objekt bekannt, sie entsprechen dem Modul (beispielsweise ca. 4 mm). Durch Rückprojektion von mindestens 3 Strahlen durch den Hauptpunkt des Objektivs, kann die tatsächliche Lage der Objektebene zur Hauptebene des Objektivs rekonstruiert werden. Hierzu wird zunächst eine Ebene durch die Punkte P0', P1' und P3' gelegt. P0' bezeichnet den Schnittpunkt der optischen Achse mit der Bildebene. Die Punkte P1' und P3' liegen ebenfalls in der Bildebene, wobei die Strecke P1'P3'paralle zu einer und P2'P4' parallel zu der anderen Richtung des Rasters liegt. Die besondere Lage dieser Punkte P1'..P4 auf Rasterlinien gewährleistet, dass die Abstände der entsprechenden Punkte P1 bis P4 auf der Objektebene, d.h. dem Schreibpapier bekannt sind.

Aus der Lage der Hauptebenen der Optik, H und H' lassen sich aus den Abständen P3'P0' und P1'P0' die Steigung m3 der Strecke H'P3', beziehungsweise die Steigung m1 der Strecke H'P1' relativ zur optischen Achse bestimmen. Aufgrund der parallaktischen Verzeichnung sind die Strecken P3'P0' und P1'P0' unterschiedlich lang.

Die Steigung des Richtungsvektors Rx in der Objektebene bestimmt sich daraus gemäß der Beziehung:

$$m_{Rx} := \frac{m3 + m1 \; k13}{1 + k13}$$

.

Dabei bezeichnet der Faktor k13 das Streckenverhältnis k13 = P1P0/P3P0.

Entsprechend gilt in der dazu senkrechten Richtung für den Richtungsvektor Ry:

$$m_{Ry} := \frac{m4 + k24\ m2}{1 + k24}.$$

Dabei bezeichnen m4 die Steigung der Strecke H'P4', m2 die Steigung der Strecke H'P2' und k24 das Streckenverhältnis k24 = P2P0/P4P0.

Anschließend werden die Vektoren Rx und Ry um die z-Achse um den Winkel α gedreht. Der Winkel α gibt den Winkel an, um den das Optimalraster in der Bildebene gedreht ist.

Zuletzt wird die so erhaltene Ebene parallel entlang der optischen Achse verschoben, bis der in seiner Lage relativ zur Bildebene bekannte Punkt $P_s(x_s, y_s, z_s)$ der Stiftspitze in dieser Ebene liegt. Die Position des Punktes $P'_s(x'_s, y'_s)$ in der Bildebene ist durch die Projektion des Punktes $P_s(x_s, y_s, z_s)$ in die Bildebene ebenfalls bekannt.

Damit ist die Position der Stiftspitze geometrisch als Punkt der Ebenengleichung definiert. Die Position der Stiftspitze relativ zur Position des Punktes P0' kann anschließend gewonnen werden, indem in der so erhaltenen Ebenengleichung für die Papierebene die kartesischen Koordinaten als Koordinaten in Einheiten von Modullängen umgerechnet werden.

Die absolute Position des Punktes P0' und damit die absolute Position der Stiftspitze wird schließlich über die Decodierung des Oberflächenmusters gewonnen.

Bezugszeichenliste:

| | |
|---|---|
| Oberflächenmuster | 1 |
| SYNC-Pattern | 2 |
| Horizontales SYNC-Pattern | 21 |
| Vertikales SYNC-Pattern | 22 |
| Codeunit | 3, 31, 32, 33, 34, 35, 36 |
| Horizontale Richtung des SYNC-Pattern | 4 |
| Vom Gesichtsfeld erfaßter Musterbereich | 6 |
| Gesichtsfeld | 9 |
| Formelemente | 11, 12 |
| Oberflächenpositionen | 51A bis 51E, 52 bis 54 |
| Kontursegmente | 60, 61 |
| Maske | 8 |
| Ursprung des Musters | 81 |
| Verschiebungsvektor | 82 |
| Ursprung der Maske | 83 |
| Wahrscheinlichkeiten der Lagen des Verschiebungsvektors | 90,92 |
| Achse des Schreibgeräts | 40 |
| Optische Achse der Bildaufzeichnungseinrichtung | 41 |
| Schnittpunkt der optischen Achse mit der Bildebene | P0' |
| Stützstellen | P1', P2', P3', P4' |
| Position der Schreibspitze | Ps |

**Patentansprüche**

1. Zweidimensionales Oberflächenmuster, zur Erkennung einer absoluten Ortsposition an der Oberfläche, umfassend ein Muster (1),
wobei das Muster (1) ein der Synchronisation dienendes SYNC-Pattern (2) und einen positionsabhängigen Code (PC(x, y)) enthält,
**dadurch gekennzeichnet, daß**

das SYNC-Pattern (2) über die Oberfläche hinweg variabel ist, entlang einer oder mehrerer Richtungen der Oberfläche eine Strukturierung oder Modulation gemäß einer vorbekannten Bildungsvorschrift aufweist und geometrisch gleichmäßig auf der Oberfläche verteilt ist.

2.  Zweidimensionales Oberflächenmuster nach Anspruch 1, **dadurch gekennzeichnet, dass** das SYNC-Pattern (2) zwei variable Komponenten (21, 22) umfasst, welche jeweils zur Synchronisation entlang zweier nicht paralleler Richtungen auf der Oberfläche dienen.

3.  Zweidimensionales Oberflächenmuster nach einem der Ansprüche 1 oder 2, **dadurch gekennzeichnet, dass** das SYNC-Pattern (2) positionsabhängigen Code aufweist.

4.  Zweidimensionales Oberflächenmuster nach einem der vorstehenden Ansprüche, wobei das SYNC-Pattern (2) das Least Significant Bit des positionsabhängigen Codes (PC(x, y)) umfasst.

5.  Zweidimensionales Oberflächenmuster nach einem der vorstehenden Ansprüche, **dadurch gekennzeichnet, daß** die Bestandteile des Musters in einer Einheit des Codes, einer Codeunit (3, 31, 32, 33, 34, 35, 36), zusammengefaßt sind, welche vorzugsweise eine quadratisch oder hexagonale Form aufweist.

6.  Zweidimensionales Oberflächenmuster nach einem der vorstehenden Ansprüche, **dadurch gekennzeichnet, daß** das SYNC-Pattern (2) mit zumindest der doppelten Ortsfrequenz in x- und y-Richtung im Vergleich zu dem positionsabhängigen Code der positionsabhängige Code (PC(x, y)) vorliegt.

7.  Zweidimensionales Oberflächenmuster nach einem der vorstehenden Ansprüche, **dadurch gekennzeichnet, daß** das Oberflächenmuster einen Document-Identifier, DI, umfaßt.

8.  Zweidimensionales Oberflächenmuster nach einem der vorstehenden Ansprüche, wobei das SYNC-Pattern (2) Teile des Document Identifiers umfasst.

9.  Zweidimensionales Oberflächenmuster nach einem der vorstehenden Ansprüche, **dadurch gekennzeichnet, daß** der positionsabhängige Code (PC(x, y)) und/oder Document-Identifier, DI, redundant codiert sind.

10.  Zweidimensionales Oberflächenmuster nach einem der vorstehenden Ansprüche, **dadurch gekennzeichnet, daß** dem positionsabhängigen Code (PC(x, y)) eine Funktion zugeordnet ist, welche die Nachbarschaftsbeziehungen zu anderen, benachbarten Codeunits (3, 31, 32, 33, 34, 35, 36) beschreibt.

11.  Zweidimensionales Oberflächenmuster nach Anspruch 11, **dadurch gekennzeichnet, daß** durch die dem positionsabhängigen Code (PC(x, y)) zugeordnete Funktion aus dem positionsabhängigen Code (PC(x, y)) einer bekannten Codeunit (3, 31, 32, 33, 34, 35, 36), weitere der positionsabhängige Codes (PC(x, y)) berechenbar sind.

12.  Zweidimensionales Oberflächenmuster nach Anspruch 10 oder 11, **dadurch gekennzeichnet, daß** mittels der dem der positionsabhängigen Code (PC(x, y)) zugeordneten Funktion aus einem einzigen positionsabhängigen Code PC(x, y) der positionsabhängige Code (PC(x, y)) sämtlicher benachbarter Codeunits (3, 31, 32, 33, 34, 35, 36) berechenbar ist.

13.  Zweidimensionales Oberflächenmuster nach einem der vorstehenden Ansprüche, **dadurch gekennzeichnet, daß** die Reihenfolge der Codeunits (3, 31, 32, 33, 34, 35, 36) an der Oberfläche in einer beliebigen Richtung an der Oberfläche verwürfelt ist.

14.  Zweidimensionales Oberflächenmuster nach einem der vorstehenden Ansprüche, **dadurch gekennzeichnet, daß** die Größe der Codeunit (3, 31, 32, 33, 34, 35, 36) in einer Richtung an der Oberfläche ca. 4mm beträgt.

15.  Zweidimensionales Oberflächenmuster nach einem der vorstehenden Ansprüche, **dadurch gekennzeichnet, daß** das Muster (1) eine Modulation aufweist.

16.  Zweidimensionales Oberflächenmuster nach Anspruch 15, **dadurch gekennzeichnet, daß** die Modulation eine Amplitudenmodulation umfaßt, welche insbesondere hell/dunkel-Muster von Formelementen (11, 12) aufweist.

17.  Zweidimensionales Oberflächenmuster nach Anspruch 16, **dadurch gekennzeichnet, daß** die Formelemente (11, 12) Quadrate, Dreiecke, Kreise oder Punkte umfassen.

18. Zweidimensionales Oberflächenmuster nach einem der Ansprüche 15 bis 17, **dadurch gekennzeichnet, daß** die Modulation eine Phasenmodulation, PSK, umfaßt, bei welcher Formelemente (11, 12), insbesondere Punkte werden bezüglich eines Bezugsrasters verschoben angeordnet sind.

19. Zweidimensionales Oberflächenmuster nach einem der Ansprüche 15 bis 17, **dadurch gekennzeichnet, daß** die Modulation eine Frequenzmodulation, FSK, umfaßt, bei welcher Gruppen von Formelementen (11, 12) mit vordefinierten 2D-Ortsfrequenzen an der Oberfläche angeordnet sind.

20. Zweidimensionales Oberflächenmuster nach einem der vorstehenden Ansprüche, **dadurch gekennzeichnet, daß** das Muster (1) mehr als eine Farbe, insbesondere mehr als einen spektral trennbaren Bestandteil, aufweist und ein spektral trennbarer Bestandteil eine andere Modulation als ein anderer spektral trennbarer Bestandteil aufweist.

21. Zweidimensionales Oberflächenmuster nach Anspruch 20, **dadurch gekennzeichnet, daß** die spektral trennbaren Bestandteile das IR-Spektrum und insbesondere IR/Fluoreszenzbanden anregbarer, auf die Oberfläche druckbarer Farben umfaßt.

22. Zweidimensionales Oberflächenmuster nach einem der Ansprüche 1 bis 21, **dadurch gekennzeichnet, daß** das Oberflächenmuster (1) auf einem Klebestreifen aufgedruckt ist.

23. Zweidimensionales Oberflächenmuster nach einem der Ansprüche 1 bis 21, **dadurch gekennzeichnet, daß** das Oberflächenmuster (1) in mehrere Teile aufgeteilt ist.

24. Zweidimensionales Oberflächenmuster nach Anspruch 23, wobei sich die Teile getrennt voneinander auf zumindest einer Oberfläche befinden.

25. Verfahren zur Decodierung von Daten eines Bereichs eines Oberflächenmusters, das wobei:

Oberflächenmuster ein der Synchronisation dienendes, geometrisch gleichmäßig auf der Oberfläche verteiltes variables SYNC-Pattern (2) enthält, welches entlang einer oder mehrerer Richtungen der Oberfläche eine Strukturierung oder Modulation gemäß einer vorbekannten Bildungsvorschrift aufweist, das Oberflächenmuster Code Units (31...36) mit positionsabhängigen Codes (PC(x, y)) enthält,

ein vollständiger, einer Position auf dem Oberflächenmuster zugeordneter positionsabhängiger Code aus einem erfaßten Bereich (6) des Oberflächenmusters (1) decodiert wird, indem im erfaßten Bereich fehlende Teile des positionsabhängigen Codes einer Code unit (31....36) durch Teile benachbarter positionsabhängiger Codes, welche im erfaßten Bereich (6) des Oberflächenmusters liegen, für die Decodierung zur Ergänzung der fehlenden Teile des positionsabhängigen Codes verwendet werden.

26. Verfahren nach Anspruch 25, **dadurch gekennzeichnet, daß** der erfäßte Bereich (6) des Oberflächenmusters so klein ist, daß höchstens ein einer Position auf dem Oberflächenmuster zugeordneter positionsabhängiger Code vollständig innerhalb des Bereiches (6) vorhanden sein kann.

27. Verfahren zur Decodierung nach Anspruch 25 oder 26, **dadurch gekennzeichnet, daß d**er erfaßte Bereich (6) des Oberflächenmusters eine wahlfreie Form hat.

28. Verfahren nach einem der Ansprüche 25, 26 oder 27, **dadurch gekennzeichnet, daß** Bestandteile des Musters in einer Einheit des Codes, einer Codeunit (3, 31, 32, 33, 34, 35, 36) zusammengefaßt sind und der Bereich (6) so klein ist, daß höchtens eine Codeunit (3, 31, 32, 33, 34, 35, 36) vollständig in dem Bereich liegt.

29. Verfahren nach Anspruch 25 zur Decodierung von in einem Oberflächenmuster enthaltenen Daten, **dadurch gekennzeichnet, daß** das Ergebnis der Decodierung für jede Codeunit (3, 31, 32, 33, 34, 35, 36) zu einer Anzahl von Vektoren vij des Typs:

der positionsabhängige Code (PC(x, y)),
Document-Identifier
Timestamp,
Errornumber,

Lage der Stiftspitze,
führt, wobei Timestamp den Zeitpunkt der Erfassung einer Codeunit, Errornumber die Anzahl von Fehlern bei der Erfassung des Codes und "Lage der Stiftspitze" den Punkt eines Schreibgerätes an der Oberfläche beschreibt.

30. Verfahren zur Decodierung von in einem Oberflächenmuster enthaltenen Daten nach Anspruch 29, **dadurch gekennzeichnet, daß** mehrere Vektoren vij zu einem Schriftsegment zusammengefasst werden falls eine Bedingung, insbesondere die Bedingung der "Stift schreibt", erfüllt ist.

31. Verfahren zur Decodierung von in einem Oberflächenmuster enthaltenen Daten nach Anspruch 30, bei welchem die Vektoren vij in zeitlicher Abfolge, entsprechend den von einem Stift mit optischer Erfassungseinrichtung erfassten Daten, zusammengesetzt werden.

32. Verfahren zur Decodierung von in einem Oberflächenmuster enthaltenen Daten nach einem der Ansprüche 30 oder 31, **dadurch gekennzeichnet, daß** bei erfüllter Bedingung "Stift schreibt" bei der Decodierung nur Bewegungen um +/- eine Codeunit in einer der Richtungen an der Oberfläche zugelassen werden.

33. Verfahren zur Decodierung von in einem Oberflächenmuster enthaltenen Daten nach einem der Ansprüche 30, 31 oder 32, **dadurch gekennzeichnet, daß** das Schriftsegment durch ein Filter gefiltert wird, bei welchem, wenn eine Codeunit Differenzen, die größer als 1 sind, liefert, dann wird der Vektor ausgeschlossen und dessen positionsabhängiger Code (PC(x, y)) durch Interpolation der zeitlichen Nachbarn ersetzt wird.

34. Verfahren zur Decodierung von in einem Oberflächenmuster enthaltenen Daten nach einem der Ansprüche 30 bis 33, **dadurch gekennzeichnet, daß** das Schriftsegment von einem Ortsfilter gefiltert wird.

35. Verfahren zur Decodierung von in einem Oberflächenmuster enthaltenen Daten nach einem der Ansprüche von 29 bis 34, ferner **gekennzeichnet durch** ein Fehlerkorrekturverfahren.

36. Verfahren zur Decodierung von in einem Oberflächenmuster enthaltenen Daten nach einem der Ansprüche von 29 bis 35, **gekennzeichnet durch** eine Kontextanalyse, wobei der wahrscheinlichste Code für die fragliche, zu entschlüsselnde Codeunit ermittelt wird, indem verschiedene Codehypothesen mit decodierten Informationen zeitlich und/oder räumlich benachbarter Codeunits verglichen werden.

37. Verfahren zur Decodierung von in einem Oberflächenmuster enthaltenen Daten nach einem der Ansprüche von 29 bis 36, **dadurch gekennzeichnet, daß** eine Abtastung des Oberflächenmusters mit mehr als 100 Hz, vorzugsweise mehr als 200 Hz und am bevorzugtesten mit mindestens 300 Hz vorgenommen wird.

38. Verfahren zur Decodierung von in einem Oberflächenmuster enthaltenen Daten nach einem der Ansprüche von 29 bis 37, **dadurch gekennzeichnet, daß** die Geschwindigkeit an der Oberfläche, bis zu welcher die absolute Position innerhalb des zweidimensionalen Musters erkennbar ist, bei einer Abtastrate von etwa 300 Hz etwa 1.2 m/s beträgt.

39. Verfahren zur Decodierung von in einem Oberflächenmuster enthaltenen Daten nach einem der Ansprüche 29 bis 38, ferner **gekennzeichnet durch** den Einsatz eines Reed-Solomon oder Hammingcodes zur Fehlerbeseitigung.

40. Verfahren nach Anspruch 39, **dadurch gekennzeichnet, daß** sich mit dem Hammingcode oder Reed-Solomon-Code zwei Fehler pro Koordinate erkennen und ein Fehler pro Koordinate beseitigen läßt.

41. Verfahren zur Decodierung von in einem Oberflächenmuster enthaltenen Daten nach einem der Ansprüche 29 bis 40, **dadurch gekennzeichnet, daß** die Daten des Document-Identifier aus mehr als einer Codeunit gewonnen werden.

42. Verfahren zur Decodierung von in einem Oberflächenmuster enthaltenen Daten nach Anspruch 39, **dadurch gekennzeichnet, daß** die Daten des Document-Identifier aus verschiedenen Teilen einer im Muster enthaltenen 8 x 8 Bit-Oberflächeninformation extrahiert werden.

43. Verfahren zur Decodierung von in einem Oberflächenmuster enthaltenen Daten nach Anspruch 41 oder 43, **dadurch gekennzeichnet, daß** für die Daten des Document-Identifier eine mehrfache Erkennung vorgenommen wird.

**44.** Verfahren gemäß einem der vorstehenden Ansprüche, bei welchem die Position (Ps) einer Spitze eines Schreibgerätes mit optischer Bildaufzeichnungseinrichtung an einer Oberfläche bestimmt wird,
**dadurch gekennzeichnet, daß**
das dem Oberflächenmuster (1) zugrunde liegende Raster mit dem vom Schreibgerät aufgezeichneten Bild verglichen wird und eine parallaktische Verzeichnung ermittelt wird,
daß aus der parallaktischen Verzeichnung die Winkel der Verkippung einer definierten Achse (40) des Schreibgerätes relativ zur Oberfläche berechnet werden und
aus der Verkippung ein Verschiebungsvektor relativ zu einer Achse (41) der Bildaufzeichnungseinrichtung berechnet wird, und wobei
die Lage (Ps) der Stiftspitze aus dem Schnittpunkt der optischen Achse (41) der Bildaufzeichnungseinrichtung mit der Oberfläche und Addition des Verschiebungsvektors zu diesem Schnittpunkt ermittelt wird.

**45.** Verfahren zur Ermittlung der Position (Ps) einer Spitze eines Schreibgerätes nach Anspruch 44, **dadurch gekennzeichnet, daß** die definierte Achse (40) des Schreibgerätes durch die Stiftspitze des Schreibgerätes und im wesentlichen in Richtung von dessen längster Erstreckung verläuft.

**46.** Verfahren zur Ermittlung der Position (Ps) einer Spitze eines Schreibgerätes nach Anspruch 44 oder 45, **dadurch gekennzeichnet, daß** die Achse (41) der Bildaufzeichnungseinrichtung die optische Achse des Abbildungssystems der Bildaufzeichnungseinrichtung ist.

**Claims**

**1.** Two-dimensional surface pattern, for detecting an absolute spatial position on the surface, comprising
a pattern (1),
wherein the pattern (1) contains a SYNC pattern (2) used for the synchronization, and a position-dependent code (PC(x, y)),
**characterised in that**
the SYNC pattern (2) is variable over the surface, comprises, along one or more directions of the surface, structuring or modulation in accordance with a previously known imaging instruction, and is geometrically distributed uniformly over the surface.

**2.** Two-dimensional surface pattern as claimed in claim 1, **characterised in that** the SYNC pattern (2) comprises two variable components (21, 22) which are each used for the synchronization along two non-parallel directions on the surface.

**3.** Two-dimensional surface pattern as claimed in any one of claims 1 or 2, **characterised in that** the SYNC pattern (2) comprises position-dependent code.

**4.** Two-dimensional surface pattern as claimed in any one of the preceding claims, wherein the SYNC pattern (2) comprises the least significant bit of the position-dependent code (PC(x, y)).

**5.** Two-dimensional surface pattern as claimed in any one of the preceding claims, **characterised in that** the components of the pattern are combined in a unit of the code, a code unit (3, 31, 32, 33, 34, 35, 36), which preferably has a square or hexagonal form.

**6.** Two-dimensional surface pattern as claimed in any one of the preceding claims, **characterised in that** the SYNC pattern (2) is present with at least the doubled spatial frequency in the x and y direction in comparison to the position-dependent code of the position dependent code (PC(x, y)).

**7.** Two-dimensional surface pattern as claimed in any one of the preceding claims, **characterised in that** the surface pattern comprises a document identifier DI.

**8.** Two-dimensional surface pattern as claimed in any one of the preceding claims, wherein the SYNC pattern (2) comprises parts of the document identifier.

**9.** Two-dimensional surface pattern as claimed in any one of the preceding claims, **characterised in that** the position-dependent code (PC(x, y)) and/or document identifier DI are redundantly encoded.

10. Two-dimensional surface pattern as claimed in any one of the preceding claims, **characterised in that** the position-dependent code (PC(x, y)) is allocated a function which describes the proximity relationships to other neighbouring code units (3, 31, 32, 33, 34, 35, 36).

11. Two-dimensional surface pattern as claimed in claim 11, **characterised in that** by means of the function allocated to the position-dependent code (PC(x, y)) further ones of the position-dependent codes (PC(x, y)) can be calculated from the position-dependent code (PC(x, y)) of a known code unit (3, 31, 32, 33, 34, 35, 36).

12. Two-dimensional surface pattern as claimed in claim 10 or 11, **characterised in that** by means of the function allocated to the position-dependent code (PC(x, y)) the position-dependent code (PC(x, y)) of all neighbouring code units (3, 31, 32, 33, 34, 35, 36) can be calculated from a single position-dependent code PC(x, y).

13. Two-dimensional surface pattern as claimed in any one of the preceding claims, **characterised in that** the sequence of code units (3, 31, 32, 33, 34, 35, 36) on the surface is scrambled in any direction on the surface.

14. Two-dimensional surface pattern as claimed in any one of the preceding claims, **characterised in that** the size of the code unit (3, 31, 32, 33, 34, 35, 36) in one direction on the surface amounts to about 4mm.

15. Two-dimensional surface pattern as claimed in any one of the preceding claims, **characterised in that** the pattern (1) comprises a modulation.

16. Two-dimensional surface pattern as claimed in claim 15, **characterised in that** the modulation comprises an amplitude modulation which comprises in particular light/dark patterns of form elements (11, 12).

17. Two-dimensional surface pattern as claimed in claim 16, **characterised in that** the form elements (11, 12) comprise squares, triangles, circles or points.

18. Two-dimensional surface pattern as claimed in any one of claims 15 to 17, **characterised in that** the modulation comprises a phase modulation PSK in which form elements (11, 12), in particular points, are disposed shifted with respect to a reference grid.

19. Two-dimensional surface pattern as claimed in any one of claims 15 to 17, **characterised in that** the modulation comprises a frequency modulation FSK in which groups of form elements (11, 12) are disposed with predefined 2D spatial frequencies on the surface.

20. Two-dimensional surface pattern as claimed in any one of the preceding claims, **characterised in that** the pattern (1) comprises more than one ink, in particular more than one spectrally separable component, and a spectrally separable component comprises a different modulation than another spectrally separable component.

21. Two-dimensional surface pattern as claimed in claim 20, **characterised in that** the spectrally separable components comprise the IR spectrum and in particular IR/fluorescence bands of activatable inks which can be printed onto the surface.

22. Two-dimensional surface pattern as claimed in any one of claims 1 to 21, **characterised in that** the surface pattern (1) is printed onto an adhesive strip.

23. Two-dimensional surface pattern as claimed in any one of claims 1 to 21, **characterised in that** the surface pattern (1) is divided into a plurality of parts.

24. Two-dimensional surface pattern as claimed in claim 23, wherein the parts are located separated from each other on at least one surface.

25. Method of decoding data from a region of a surface pattern, wherein
the surface pattern contains a variable SYNC pattern (2) which is used for the synchronisation, is geometrically distributed uniformly over the surface and which, along one or more directions of the surface, comprises structuring or modulation in accordance with a previously known imaging instruction,
the surface pattern contains code units (31...36) with position-dependent codes (PC(x, y))
a complete position-dependent code, allocated to a position on the surface pattern, from a detected region (6) of the surface pattern (1) is decoded in that parts of the position-dependent code of a code unit (31...36) which are missing from the detected region are used by parts of neighbouring position-dependent codes which lie within the detected region (6) of the surface pattern for the decoding process in order to replace the missing parts of the position-dependent code.

26. Method as claimed in claim 25, **characterised in that** the detected region (6) of the surface pattern is so small that a maximum of one position-dependent code allocated to a position on the surface pattern can be provided completely within the region (6).

27. Method of decoding as claimed in claim 25 or 26, **characterised in that** the detected region (6) of the surface pattern has an optional form.

28. Method as claimed in any one of claims 25, 26 or 27, **characterised in that** components of the pattern are combined in a unit of the code, a code unit (3, 31, 32, 33, 34, 35, 36), and the region (6) is so small that a maximum of one code unit (3, 31, 32, 33, 34, 35, 36) lies completely within the region.

29. Method as claimed in claim 25 for decoding data contained in a surface pattern,
    **characterised in that** the result of the decoding for each code unit (3, 31, 32, 33, 34, 35, 36) leads to a number of vectors vij of the type:
    position-dependent code (PC(x, y)),
    document identifier,
    timestamp,
    error number,
    position of the stylus tip,
    wherein the timestamp describes the moment of detection of a code unit, error number describes the number of errors in detecting the code, and "position of the stylus tip" describes the tip of a writing implement on the surface.

30. Method of decoding data contained in a surface pattern as claimed in claim 29, **characterised in that** a plurality of vectors vij are combined to form a writing segment if a condition is fulfilled, in particular the condition "stylus writes".

31. Method of decoding data contained in a surface pattern as claimed in claim 30, in which the vectors vij are composed chronologically corresponding to the data detected by a stylus with an optical detection device.

32. Method of decoding data contained in a surface pattern as claimed in any one of claims 30 or 31, **characterised in that** when the "stylus writes" condition is fulfilled during decoding only movements by +/- one code unit in one of the directions on the surface are allowed.

33. Method of decoding data contained in a surface pattern as claimed in any one of claims 30, 31 or 32, **characterised in that** the writing segment is filtered by a filter in which, when a code unit delivers differences of greater than 1, the vector is excluded and the position-dependent code (PC(x, y)) thereof is replaced by interpolation of the temporal neighbours.

34. Method of decoding data contained in a surface pattern as claimed in any one of claims 30 to 33, **characterised in that** the writing segment is filtered by a spatial filter.

35. Method of decoding data contained in a surface pattern as claimed in any one of claims 29 to 34, further **characterised by** an error correction process.

36. Method of decoding data contained in a surface pattern as claimed in any one of claims 29 to 35, **characterised by** a context analysis, wherein the most likely code for the code unit in question which is to be decoded is determined in that different code hypotheses are compared with decoded information of temporally and/or spatially neighbouring code units.

37. Method of decoding data contained in a surface pattern as claimed in any one of claims 29 to 36, **characterised in that** sampling of the surface pattern is carried out at more than 100Hz, preferably more than 200Hz and most preferably at least 300Hz.

38. Method of decoding data contained in a surface pattern as claimed in any one of claims 29 to 37, **characterised**

**in that** the speed on the surface up to which the absolute position can be detected within the two-dimensional pattern amounts to about 1.2m/s at a sampling rate of about 300Hz.

39. Method of decoding data contained in a surface pattern as claimed in any one of claims 29 to 38, further **characterised by** the use of a Reed-Solomon or Hamming code for error removal.

40. Method as claimed in claim 39, **characterised in that** with the Hamming code or Reed-Solomon code two errors per coordinate can be detected and one error per coordinate can be removed.

41. Method of decoding data contained in a surface pattern as claimed in any one of claims 29 to 40, **characterised in that** the data of the document identifier are obtained from more than one code unit.

42. Method of decoding data contained in a surface pattern as claimed in claim 39, **characterised in that** the data of the document identifier are extracted from different parts of 8 x 8 bit surface information contained in the pattern.

43. Method of decoding data contained in a surface pattern as claimed in claim 41 or 43, **characterised in that** multiple detections are carried out for the data of the document identifier.

44. Method in accordance with any one of the preceding claims in which the position (Ps) of a tip of a writing implement with an optical image recording device is determined on a surface, **characterised in that**
the grid forming the basis of the surface pattern (1) is compared with the image recorded by the writing implement and a parallactic distortion is determined,
that from the parallactic distortion the angles of the tilting of a defined axis (40) of the writing implement relative to the surface are calculated and
from the tilting a displacement vector relative to an axis (41) of the image recording device is calculated, and wherein the position (Ps) of the stylus tip is determined from the intersection of the optical axis (41) of the image recording device with the surface and addition of the displacement vector to this intersection.

45. Method of determining the position (Ps) of a tip of a writing implement as claimed in claim 44, **characterised in that** the defined axis (40) of the writing implement extends through the stylus tip of the writing implement and essentially in the direction of its longest extension.

46. Method of determining the position (Ps) of a tip of a writing implement as claimed in claim 44 or 45, **characterised in that** the axis (41) of the image recording device is the optical axis of the imaging system of the image recording device.

**Revendications**

1. Dessin de surface à deux dimensions pour la détection d'une position absolue sur la surface, comprenant un dessin (1),
le dessin (1) contenant un motif SYNC (2) servant à la synchronisation et un code (PC (x, y)) dépendant de la position, **caractérisé par le fait que** le motif SYNC (2) est variable sur la surface, comporte le long d'une ou plusieurs directions de la surface une structuration ou une modulation selon une règle de formation connue à l'avance et est géométriquement régulièrement réparti sur la surface.

2. Dessin de surface à deux dimensions selon la revendication 1, **caractérisé par le fait que** le motif SYNC (2) comprend deux composantes variables (21, 22) qui servent respectivement à la synchronisation le long de deux directions non parallèles sur la surface.

3. Dessin de surface à deux dimensions selon l'une des revendications 1 ou 2, **caractérisé par le fait que** le motif SYNC (2) comporte un code dépendant de la position.

4. Dessin de surface à deux dimensions selon l'une des revendications précédentes, le motif SYNC (2) comprenant le bit le moins significatif du code (PC (x, y)) dépendant de la position.

5. Dessin de surface à deux dimensions selon l'une des revendications précédentes, **caractérisé par le fait que** les constituants du dessin sont réunis dans une unité du code, aussi appelée Codeunit, (3, 31, 32, 33, 34, 35, 36) qui a une forme de préférence carrée ou hexagonale.

6. Dessin de surface à deux dimensions selon l'une des revendications précédentes, **caractérisé par le fait que** le motif SYNC (2) est présent pour au moins le double de la fréquence zonale en direction x et en direction y en comparaison du code dépendant de la position (PC (x, y)).

7. Dessin de surface à deux dimensions selon l'une des revendications précédentes, **caractérisé par le fait que** le dessin de surface comprend un identificateur de document, DI.

8. Dessin de surface à deux dimensions selon l'une des revendications précédentes, **caractérisé par le fait que** le motif SYNC (2) comprend des parties de l'identificateur de document.

9. Dessin de surface à deux dimensions selon l'une des revendications précédentes, **caractérisé par le fait que** le code dépendant de la position (PC (x, y)) et/ou l'identificateur de document DI sont codés de façon redondante.

10. Dessin de surface à deux dimensions selon l'une des revendications précédentes, **caractérisé par le fait qu'**il est associé au code dépendant de la position (PC (x, y)) une fonction qui décrit les relations de voisinage avec d'autres unités de code voisines (3, 31, 32, 33, 34, 35, 36).

11. Dessin de surface à deux dimensions selon la revendication 11, **caractérisé par le fait que**, avec la fonction associée au code dépendant de la position (PC (x, y)), d'autres codes dépendants de la position (PC (x, y)) sont calculables à partir du code dépendant de la position (PC (x, y)) d'une unité de code connue (3, 31, 32, 33, 34, 35, 36).

12. Dessin de surface à deux dimensions selon la revendication 10 ou 11, **caractérisé par le fait que**, au moyen de la fonction associée au code dépendant de la position (PC (x, y)), le code dépendant de la position (PC (x, y)) de toutes les unités de code voisines (3, 31, 32, 33, 34, 35, 36) est calculable à partir d'un seul code dépendant de la position (PC (x, y)).

13. Dessin de surface à deux dimensions selon l'une des revendications précédentes, **caractérisé par le fait que** l'ordre des unités de code (3, 31, 32, 33, 34, 35, 36) sur la surface est brouillé dans une direction quelconque sur la surface.

14. Dessin de surface à deux dimensions selon l'une des revendications précédentes, **caractérisé par le fait que** la grandeur de l'unité de code (3, 31, 32, 33, 34, 35, 36) vaut 4 mm environ dans une direction sur la surface.

15. Dessin de surface à deux dimensions selon l'une des revendications précédentes, **caractérisé par le fait que** le dessin (1) comporte une modulation.

16. Dessin de surface à deux dimensions selon la revendication 15, **caractérisé par le fait que** la modulation comprend une modulation d'amplitude qui comporte notamment des dessins clairs / sombres d'éléments géométriques (11, 12).

17. Dessin de surface à deux dimensions selon la revendication 16, **caractérisé par le fait que** les éléments géométriques (11, 12) comprennent des carrés, triangles, cercles ou points.

18. Dessin de surface à deux dimensions selon l'une des revendications 15 à 17, **caractérisé par le fait que** la modulation comprend une modulation de phase, PSK, lors de laquelle des éléments géométriques (11, 12), notamment des points, sont agencés décalés par rapport à une trame de référence.

19. Dessin de surface à deux dimensions selon l'une des revendications 15 à 17, **caractérisé par le fait que** la modulation comprend une modulation de fréquence, FSK, lors de laquelle des groupes d'éléments géométriques (11, 12) sont agencés avec des fréquences zonales 2D prédéfinies sur la surface.

20. Dessin de surface à deux dimensions selon l'une des revendications précédentes, **caractérisé par le fait que** le dessin (1) comporte plus d'une couleur, notamment plus d'un constituant séparable spectralement, et qu'un constituant séparable spectralement a une autre modulation qu'un autre constituant séparable spectralement.

21. Dessin de surface à deux dimensions selon la revendication 20, **caractérisé par le fait que** les constituants séparables spectralement comprennent le spectre IR et notamment des bandes IR / fluorescentes de couleurs excitables, imprimables sur la surface.

22. Dessin de surface à deux dimensions selon l'une des revendications 1 à 21, **caractérisé par le fait que** le dessin de surface (1) est imprimé sur un ruban adhésif.

23. Dessin de surface à deux dimensions selon l'une des revendications 1 à 21, **caractérisé par le fait que** le dessin de surface (1) est divisé en plusieurs parties.

24. Dessin de surface à deux dimensions selon la revendication 23, les parties se trouvant séparées les unes des autres sur au moins une surface.

25. Procédé de décodage de données d'une zone d'un dessin de surface, dans lequel
le dessin de surface contient un motif SYNC variable (2) qui sert à la synchronisation, qui est géométriquement régulièrement réparti sur la surface et qui comporte le long d'une ou plusieurs directions de la surface une structuration ou une modulation selon une règle de formation connue à l'avance,
le dessin de surface contient des unités de code (31 à 36) avec des codes dépendants de la position (PC (x, y)),
un code dépendant de la position, complet et associé à une position sur le dessin de surface, est décodé à partir d'une zone acquise (6) du dessin de surface (1) du fait que des parties du code dépendant de la position d'une unité de code (31 à 36) qui manquent dans la zone acquise (6) sont complétées par des parties de codes dépendants de la position voisins qui se trouvent dans le dessin de surface en vue du décodage.

26. Procédé selon la revendication 25, **caractérisé par le fait que** la zone acquise (6) du dessin de surface est si petite que, au maximum, un code dépendant de la position associé à une position sur le dessin de surface peut être complètement présent à l'intérieur de la zone (6).

27. Procédé de décodage selon la revendication 25 ou 26, **caractérisé par le fait que** la zone acquise (6) du dessin de surface a une forme pouvant être librement choisie.

28. Procédé selon l'une des revendications 25, 26 ou 27, **caractérisé par le fait que** des constituants du dessin sont réunis dans une unité du code, aussi appelée Codeunit, (3, 31, 32, 33, 34, 35, 36) et que la zone (6) est si petite que, au maximum, une unité de code (3, 31, 32, 33, 34, 35, 36) se trouve complètement dans la zone.

29. Procédé selon la revendication 25 pour le décodage de données contenues dans un dessin de surface, **caractérisé par le fait que** le résultat du décodage pour chaque unité de code (3, 31, 32, 33, 34, 35, 36) conduit à un certain nombre de vecteurs vij du type :

> le code dépendant de la position (PC (x, y)),
> identificateur de document,
> Timestamp,
> Errornumber,
> position de la pointe de crayon,
> Timestamp décrivant l'instant de l'acquisition d'une unité de code, Errornumber le nombre d'erreurs lors de l'acquisition du code et "position de la pointe de crayon" le point d'un appareil d'écriture sur la surface.

30. Procédé pour le décodage de données contenues dans un dessin de surface selon la revendication 29, **caractérisé par le fait que** plusieurs vecteurs vij sont réunis en un segment d'écriture si une condition, notamment la condition "le crayon écrit", est vérifiée.

31. Procédé pour le décodage de données contenues dans un dessin de surface selon la revendication 30, **caractérisé par le fait que** les vecteurs vij sont rassemblés dans l'ordre chronologique, en fonction des données acquises par un crayon avec dispositif d'acquisition optique.

32. Procédé pour le décodage de données contenues dans un dessin de surface selon l'une des revendications 30 ou 31, **caractérisé par le fait que**, lorsque la condition "le crayon écrit" est vérifiée, on n'autorise lors du décodage que des mouvements de +/- une unité de code dans l'une des directions sur la surface.

33. Procédé pour le décodage de données contenues dans un dessin de surface selon l'une des revendications 30, 31 ou 32, **caractérisé par le fait que** le segment d'écriture est filtré par un filtre avec lequel, si une unité de code fournit des différences qui sont supérieures à 1, le vecteur est exclu et son code dépendant de la position (PC (x, y)) est remplacé par l'interpolation des voisins dans le temps.

34. Procédé pour le décodage de données contenues dans un dessin de surface selon l'une des revendications 30 à 33, **caractérisé par le fait que** le segment d'écriture est filtré par un filtre zonal.

35. Procédé pour le décodage de données contenues dans un dessin de surface selon l'une des revendications 29 à 34, **caractérisé en** plus par un procédé de correction d'erreur.

36. Procédé pour le décodage de données contenues dans un dessin de surface selon l'une des revendications 29 à 35, **caractérisé par** une analyse de contexte, le code le plus probable pour l'unité de code en question à décrypter étant déterminé en comparant différentes hypothèses de code à des informations décodées d'unités de code voisines dans le temps et/ou dans l'espace.

37. Procédé pour le décodage de données contenues dans un dessin de surface selon l'une des revendications 29 à 36, **caractérisé par le fait qu'**un échantillonnage du dessin de surface est effectué avec une fréquence de plus de 100 Hz, de préférence de plus de 200 Hz et encore de préférence d'au moins 300 Hz.

38. Procédé pour le décodage de données contenues dans un dessin de surface selon l'une des revendications 29 à 37, **caractérisé par le fait que** la vitesse sur la surface, vitesse jusqu'à laquelle la position absolue à l'intérieur du dessin à deux dimensions est détectable, vaut 1,2 m/s environ pour un taux d'échantillonnage de 300 Hz environ.

39. Procédé pour le décodage de données contenues dans un dessin de surface selon l'une des revendications 29 à 38, **caractérisé en** plus par l'utilisation d'un code de Reed-Solomon ou de Hamming en vue de l'élimination d'erreurs.

40. Procédé selon la revendication 39, **caractérisé par le fait que**, avec le code de Reed-Solomon ou de Hamming, on peut détecter deux erreurs par coordonnée et éliminer une erreur par coordonnée.

41. Procédé pour le décodage de données contenues dans un dessin de surface selon l'une des revendications 29 à 40, **caractérisé par le fait que** les données de l'identificateur de document sont obtenues à partir de plus d'une unité de code.

42. Procédé pour le décodage de données contenues dans un dessin de surface selon la revendication 39, **caractérisé par le fait que** les données de l'identificateur de document sont extraites de différentes parties d'une information de surface de 8 x 8 bits contenue dans le dessin.

43. Procédé pour le décodage de données contenues dans un dessin de surface selon la revendication 41 ou 43, **caractérisé par le fait que**, pour les données de l'identificateur de document, on effectue une détection multiple.

44. Procédé selon l'une des revendications précédentes, dans lequel la position (Ps) d'une pointe d'un appareil d'écriture avec dispositif optique d'enregistrement d'image sur une surface est déterminée, **caractérisé par le fait que**
la trame à la base du dessin de surface (1) est comparée à l'image enregistrée par l'appareil d'écriture et une distorsion parallactique est déterminée,
à partir de la distorsion parallactique, les angles du basculement d'un axe défini (40) de l'appareil d'écriture par rapport à la surface sont calculés, et
à partir du basculement, un vecteur de translation par rapport à un axe (41) du dispositif d'enregistrement d'image est calculé,
la position (Ps) de la pointe de crayon étant déterminée à partir de l'intersection de l'axe optique (41) du dispositif d'enregistrement d'image avec la surface et par addition du vecteur de translation à ce point d'intersection.

45. Procédé pour la détermination de la position (Ps) d'une pointe d'un appareil d'écriture selon la revendication 44, **caractérisé par le fait que** l'axe défini (40) de l'appareil d'écriture passe par la pointe de crayon de l'appareil d'écriture et s'étend globalement en direction de son extension la plus longue.

46. Procédé pour la détermination de la position (Ps) d'une pointe d'un appareil d'écriture selon la revendication 44 ou 45, **caractérisé par le fait que** l'axe (41) du dispositif d'enregistrement d'image est l'axe optique du système de reproduction du dispositif d'enregistrement d'image.

**Fig. 1**

**Fig. 2**

**Fig. 3**

**Fig. 4**

**Fig. 5**

**Fig. 6**

**Fig. 8**

**Fig. 7**

**Fig. 9A**

**Fig. 9B**

**Fig. 10**

**Fig. 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5939703 A